# EUROPÄISCHE PATENTSCHRIFT

(11) **EP 3 409 090 B1**
(45) Veröffentlichungstag und Bekanntmachung des Hinweises auf die Patenterteilung: **04.03.2020**
(21) Anmeldenummer: 18000439.2
(22) Anmeldetag: 08.05.2018
(51) Int. Cl.: A01C 7/08, A01C 15/04

(54) **PNEUMATISCHE VERTEILMASCHINE UND VERFAHREN ZUM AUSBRINGEN VON VERTEILGUT MIT DERSELBEN**
PNEUMATIC DISTRIBUTOR AND METHOD FOR DELIVERY OF DISTRIBUTED GOODS WITH THE SAME
MACHINE D'ÉPANDAGE PNEUMATIQUE ET PROCÉDÉ DE DISTRIBUTION DE PRODUIT À ÉPANDRE AU MOYEN DE LADITE MACHINE D'ÉPANDAGE PNEUMATIQUE

(30) Priorität: 29.05.2017 DE 102017005093
(43) Veröffentlichungstag der Anmeldung: 05.12.2018
(73) Patentinhaber: RAUCH Landmaschinenfabrik GmbH, 76547 Sinzheim (DE)
(72) Erfinder: Stöcklin, Volker, D-77975 Ringsheim (DE); Kopp, Christian, D-78830 Bühlertal (DE); Rauch, Norbert, D-76547 Sinzheim (DE)
(74) Vertreter: Lichti - Patentanwälte Partnerschaft mbB

(56) Entgegenhaltungen:
- EP-A1- 2 878 187
- EP-A2- 0 219 015
- DE-A1- 3 335 805
- DE-A1- 3 616 538
- US-A- 2 990 186

## Beschreibung

Die Erfindung betrifft ein Verfahren zum Ausbringen von Verteilgut mittels einer pneumatischen Verteilmaschine, umfassend
- wenigstens ein Dosierorgan mit einer in einem Dosiergehäuse gelagerten, rotierbar angetriebenen Dosierwalze zur Dosierung des Verteilgutes, und
- eine Mehrzahl an einem jeweiligen Axialabschnitt der Dosierwalze des Dosierorgans nachgeordneten Übergabekammern, welche einerseits mit wenigstens einem Gebläse in Verbindung stehen und welche andererseits in je eine Förderleitung münden, um das von einem jeweiligen Axialabschnitt der Dosierwalze des Dosierorgans dosierte Verteilgut pneumatisch an je ein Verteilorgan zu überführen, welche nach Art von Pralltellern oder Prallplatten ausgebildet und mit seitlichem Abstand von der Längsachse der Verteilmaschine angeordnet sind,
   wobei die Verteilmaschine entlang von Fahrgassen über den Boden bewegt und das mittels des wenigstens einen Dosierorgans dosierte Verteilgut mittels der Verteilorgane auf dem Boden verteilt wird. Die Erfindung bezieht sich ferner auf eine zur Durchführung eines solchen Verfahrens geeignete pneumatische Verteilmaschine zum Ausbringen von Verteilgut gemäß dem Oberbegriff des Anspruchs 9.

Derartige pneumatische Verteilmaschinen sind insbesondere in Form von pneumatischen Düngerstreuern und/oder Sämaschinen zum Ausbringen von pulver- bzw. partikelförmigem Verteilgut, wie Dünger, Saatgut und dergleichen, in verschiedener Ausgestaltung bekannt und umfassen üblicherweise einen Vorratsbehälter zur Aufnahme des Verteilgutes, unterhalb dessen das oder die Dosierorgan(e) angeordnet ist bzw. sind. Während als Dosierorgane häufig auch mit einer Auslauföffnung des Vorratsbehälters zusammenwirkende, aktuatorisch oder manuell betätigte Dosierschieber zum Einsatz gelangen, weist das Dosierorgan bei den hier in Frage stehenden pneumatischen Verteilmaschinen eine rotierbar angetriebene Dosierwalze auf, welche in Form einer Zellenrad- und/oder Nockenradwalze ausgestaltet sein kann. Die Dosierwalze ist in einem Dosiergehäuse gelagert, welches üblicherweise einen an seiner Oberseite angeordneten, beispielsweise mit dem Vorratsbehälter in Verbindung stehenden Einlass und eine an seiner Unterseite angeordneten Auslass aufweist. Ein solches Dosierorgan ist z.B. aus der EP 2 786 649 A2 bekannt.

Gattungsgemäße pneumatische Verteilmaschinen können einerseits in leichter Bauart als Anbaugeräte konzipiert sein, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise seitlich nach außen ragende Ausleger, welche in unterschiedlichem Abstand voneinander endende Förderleitungen aufnehmen. Zur Förderung des Verteilgutes dient ein Gebläse, dessen Druckleitung sich an einen Auslass des Dosiergehäuses eines jeweiligen Dosierorgans anschließt und in einem Druckverteiler mündet, an welchen sich die Förderleitungen anschließen. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Streugutes von der Dosierwalze des Dosierorgans an die Förderleitungen, um sicherzustellen, dass jeder Förderleitung die gewünschte Menge an Verteilgut aufgegeben wird. Das Verteilgut wird schließlich pneumatisch über die nach außen umgelenkten Förderleitungen bis zu deren Ende gefördert, wo das Streugut an entsprechende Verteilorgane überführt wird. Letztere sind nach Art von Prallplatten bzw. Pralltellern ausgestaltet, auf welche das in einer jeweiligen Förderleitung pneumatisch transportierte Verteilgut auftrifft und von dort im Wesentlichen fächerförmig auf dem Boden abgelegt wird. Die sich senkrecht zur Fahrtrichtung der pneumatischen Verteilmaschine erstreckende Breite eines jeweiligen Streufächers, welcher mittels eines jeweiligen Verteilorgans auf dem Boden abgelegt wird, ist im Rahmen der vorliegenden Offenbarung als "Verteilungsbreite" bezeichnet. Sie entspricht in der Regel etwa dem Doppelten des seitlichen Abstandes der Verteilorgane. Infolge der Überlappung der einzelnen Streufächer der einzelnen Verteilorgane wird eine gleichmäßige Querverteilung des Verteilgutes über die gesamte Arbeitsbreite erreicht.

Eine derartige pneumatische Verteilmaschine ist in Form eines pneumatischen Düngerstreuers beispielsweise aus der DE 10 2004 030 240 A1 bekannt, welche hiermit ausdrücklich zum Gegenstand der vorliegenden Offenbarung gemacht wird. Die bekannte pneumatische Verteilmaschine weist dabei eine Mehrzahl an Dosierorganen auf, welche jeweils eine drehangetriebene Dosierwalze umfassen, an deren Dosiergehäuse sich auslassseitig wiederum mehrere, mittels Gebläse druckbeaufschlagte Übergabekammern anschließen, von welchen gruppenweise mehrere Förderleitungen abgehen, welche in je einem Verteilorgan münden. Eine Teilbreitenschaltung ist dadurch gewährleistet, dass jedem Dosierorgan ein eigener, unabhängig voneinander drehzahlgesteuerter Motor zum Antrieb seiner jeweiligen Dosierwalze zugeordnet ist, so dass nebeneinander angeordnete Verteilorgane, welche von den jeweiligen Gruppen an Förderleitungen mit Verteilgut versorgt sind, die von einem jeweiligen Dosierorgan ausgehen, gruppenweise zu- bzw. abgeschaltet werden können. Ferner lassen sich durch sukzessives Einschalten bzw. Ausschalten der Dosierorgane derart, dass zunächst die mit den äußeren Verteilorganen in Verbindung stehenden Dosierorgane eingeschaltet werden und sodann erst die weiter inneren, bzw. dass zunächst die mit den inneren Verteilorganen in Verbindung stehenden Dosierorgane abgeschaltet werden und sodann erst die weiter äußeren, die zum pneumatischen Transport des Verteilgutes durch die verschieden langen Förderleitungen erforderlichen unterschiedlichen Transportzeiten kompensieren, so dass der Verteilvorgang am Anfang des Feldes gleichmäßig begonnen bzw. am Ende des Feldes gleichmäßig beendet werden kann. Darüber hinaus ist es durch Antrieb der Dosierwalzen der Dosierorgane mit unterschiedlichen Rotationsgeschwindigkeiten auch möglich, verschiedenen Feldbereichen mit unterschiedlichem Versorgungsbedarf an Verteilgut innerhalb der gesamten Arbeitsbreite Rechnung zu tragen oder bei der Kurvenfahrt andernfalls im Kurveninneren entstehende Überversorgungen bzw. im Kurvenäußeren entstehende Unterversorgungen zu kompensieren.

Auf diese Weise lässt sich folglich eine, wenngleich relativ grobe, Teilbreitenschaltung realisieren, indem die unabhängig voneinander drehangetrieben Dosierwalzen der Dosierorgane jeweils mit Gruppen von Verteilorganen kommunizieren, wobei jedoch die Zuordnung eines eigenen Dosierorgans einem jeweiligen Verteilorgan aus Platzgründen praktisch nicht möglich, geschweige denn wirtschaftlich wäre. Um innerhalb einer Teilbreite einzelne Verteilorgane abschalten zu können, wie es beispielsweise beim Ausbringen von Verteilgut im Bereich des Feldrandes in Bezug auf die äußeren Verteilorgane erforderlich sein kann, ist es bei pneumatischen Verteilmaschinen bekannt, die mit den nicht benötigten Verteilorganen über eine jeweilige Übergabekammer in Verbindung stehenden Axialabschnitte der Dosierwalze, welche entweder gänzlich austauschbar oder aus einzelnen, gegeneinander austauschbaren, aber gemeinsam drehangetriebenen Dosierradringen, wie z.B. Zellenrad- oder Nockenradringen, zusammengesetzt sein kann (vgl. z.B. die oben zitierte 2 786 649 B1), mit die Zellenradkammern bzw. die Nockentäler überdeckenden Blindringen zu versehen oder einzelne Dosierradringe durch Blindringe auszutauschen.

Die DE 36 16 538 A1 beschreibt eine pneumatische Verteilmaschine in Form eines Pneumatikstreuers mit einem Vorratsbehälter und einem Gebläse sowie mit einer Mehrzahl an Verteilorganen in Form von Pralltellern, welche mit unterschiedlichem Seitenabstand von der Längsachse der Verteilmaschine angeordnet sind und von je einer Förderleitung mit Verteilgut versorgt sind. Ein Dosierorgan mit einer in einem Dosiergehäuse rotierbar angetriebenen Dosierwalze mit einer Mehrzahl an Nockenrädern dient zur dosierten Überführung des Verteilgutes in eine jeweilige Förderleitung, wobei die einzelnen Nockenräder der Dosierwalze mittels je einer Kupplung individuell von einem gemeinsamen Drehantrieb entkoppelbar sind, um die Materialzufuhr zu den einzelnen Förderleitungen getrennt und unabhängig voneinander zu unterbrechen und auf diese Weise für eine fein unterteilte Teilbreitenschaltung zu sorgen.

Aus der EP 0 219 015 A2 ist eine weitere, insbesondere in Form eines Pneumatikstreuers ausgestaltete pneumatische Verteilmaschine mit einem Dosierorgan in Form einer Dosierwalze mit einer Mehrzahl an Dosierrädern sowie mit einer Mehrzahl an Verteilorganen in Form von Pralltellern bekannt. Die Drehzahl der individuell regelbaren Dosierräder der Dosierwalze ist abschnittsweise, vorzugsweise ausgehend von einem Grundausbringmengenwert, veränderbar, um die Ausbringmenge des Verteilgutes zu vergrößern oder zu verkleinern.

Was die in Form von Pralltellern oder Prallplatten ausgestalteten Verteilorgane betrifft, so weisen diese jeweils dieselben Verteilungsbreiten - quer zur Fahrtrichtung betrachtet - auf, welche an die notwendige teilweise Überlappung der hierdurch ausgebrachten Streufächer abgestimmt ist, um eine gleichmäßige Querverteilung zu erzielen. Um einem unterschiedlichen Abstand solcher Verteilorgane zum Boden zu kompensieren und auf diese Weise die gewünschten Streufächer in gleicher Weise zu erzeugen, wenn z.B. auf ebenen Boden oder auf ein Stoppelfeld gestreut wird, ohne die Verteilmaschine selbst anheben bzw. absenken zu müssen, ist es aus der DE 32 11 335 A1 ferner bekannt, die Prallplatten um eine horizontale Achse schräg nach oben bzw. schräg nach unten zu verschwenken, so dass das Verteilgut - in Fahrtrichtung betrachtet - von der Prallplatte entweder schräg nach oben (etwa über den Pflanzenbestand eines Stoppelfeldes hinweg) oder schräg nach unten (etwa direkt auf den ebenen Boden) reflektiert werden kann und folglich in beiden Fällen die gewünschten Streufächer erzeugt werden können, welche durch teilweise Überlappung die konstanten Querverteilung gewährleisten.

Aufgrund der nicht unerheblichen Kosten des Verteilgutes sowie aus Umweltschutzgründen gehen die Bestrebungen stets dahin, die beispielsweise mittels einer Applikationskarte vorgegebene Soll-Verteilungsmenge an Verteilgut nicht zu überschreiten sowie insbesondere in denjenigen Bereichen, in welchen der Boden - weil z.B. dort keine Pflanzen wachsen bzw. ernährt werden sollen - keine Versorgung mit dem Verteilgut erfordert, möglichst gar kein Verteilgut auszubringen. Dies insbesondere im Falle des Ausbringens von Düngemitteln um so mehr, als sich die gesetzlichen Rahmenbedingungen im Hinblick auf einen Schutz des Grundwassers vor dem Eintrag von Nitraten und dergleichen zunehmend verschärfen.

Die DE 44 10 549 A1 beschreibt eine pneumatische Verteilmaschine in Form einer Sämaschine, deren Verteilorgane anstelle von Pralltellern oder -platten von Säscharen gebildet sind, um eine Säfurche im Boden anzulegen, in welcher das Saatgut abgelegt wird. Die bekannte Sämaschine umfasst drei Gruppen von Dosierorganen, welche von axialen Abschnitten einer Dosierwalze gebildet sind und welchen jeweils eine Förderleitung zugeordnet ist, die zu je einem Verteilerkopf führen. An jeden Verteilerkopf sind Schlauchleitungen angeschlossen, welche an je einer der Säschare münden. Während die an zwei der Verteilerköpfe angeschlossenen Schlauchleitungen zu Säscharen außerhalb der auf dem Feld angelegten Fahrgassen führen, versorgt der dritte Verteilerkopf die sogenannten Fahrgassensäschare, welche im Bereich der Fahrgassen angeordnet sind. Auf diese Weise ist es möglich, dass zum Anlegen der Fahrgassen der Betrieb desjenigen Verteilerkopfes, an welchen die Fahrgassensäschare angeschlossen sind, unterbrochen wird, so dass die Fahrgassensäschare während des Anlegens der Fahrgassen deaktiviert werden können. Davon abgesehen, dass eine Anpassung der Fahrgassensäschare an unterschiedliche Abstände von auf verschiedenen Feldern anzulegenden Fahrgassen auf diese Weise allenfalls bedingt möglich ist, lässt sich die Zu- bzw. Abschaltung der Fahrgassensäschare nicht auf eine gattungsgemäße, mit Verteilorganen in Form von Pralltellern oder -platten ausgestattete, gattungsgemäße Verteilmaschine übertragen, da dort einer gleichmäßigen Querverteilung der mittels eines jeweiligen Verteilorgans ausgebrachten Streufächer Rechnung getragen werden muss.

Der Erfindung liegt daher die Aufgabe zugrunde, ein Verfahren zum Ausbringen von Verteilgut der eingangs genannten Art sowie eine zur Durchführung eines solchen Verfahrens geeignete pneumatische Verteilmaschine auf einfache und kostengünstige Weise dahingehend weiterzubilden, dass die Menge an ausgebrachtem Verteilgut reduziert werden kann, ohne in den zur Kultivierung von Pflanzen vorgesehenen Bereichen sowohl eine Unterversorgung als auch einer Überversorgung des Bodens zu verursachen.

In verfahrenstechnischer Hinsicht wird diese Aufgabe bei einem Verfahren zum Ausbringen von Verteilgut mittels einer pneumatischen Verteilmaschine der eingangs genannten Art dadurch gelöst, dass auf die Fahrgassen zumindest im Bereich der Fahrspuren der Verteilmaschine und/oder im Bereich der Fahrspuren einer sie tragenden Zugmaschine eine gegenüber der Soll-Verteilungsmenge reduzierte Verteilungsmenge an Verteilgut oder im Wesentlichen kein Verteilgut ausgebracht wird, wobei einem jeweiligen Verteilorgan, in dessen Verteilungsbreite sich eine Fahrspur oder ein Abschnitt einer Fahrspur befindet, eine Begrenzungseinrichtung zugeordnet wird, welche zur Verschmälerung der Verteilungsbreite des jeweiligen Verteilorgans um die Breite der Fahrspur oder deren Abschnittes ausgebildet ist.

Zur Lösung dieser Aufgabe sieht die Erfindung bei einer pneumatischen Verteilmaschine der eingangs genannten Art, welche zum Ausbringen einer gegenüber der Soll-Verteilungsmenge reduzierten Verteilungsmenge an Verteilgut oder im Wesentlichen keines Verteilgutes auf den Fahrgassen zumindest im Bereich der Fahrspuren der Verteilmaschine und/oder im Bereich der Fahrspuren einer sie tragenden Zugmaschine ausgebildet ist, ferner vor, dass ein jeweiliges Verteilorgan, in dessen Verteilungsbreite sich eine Fahrspur oder ein Abschnitt einer Fahrspur befindet, mit einer Begrenzungseinrichtung versehen ist, welche zur Verschmälerung der Verteilungsbreite des jeweiligen Verteilorgans um die Fahrspur oder um deren Abschnitt ausgebildet ist.

Die Erfindung geht von der Überlegung aus, dass gattungsgemäße Verteilmaschinen im Regelbetrieb stets entlang immer denselben, auf dem Feld angelegten Fahrgassen bewegt werden, wobei bis zur Erntereife der angebauten Pflanzen in aller Regel mehrere, in zeitlichen Abständen erfolgende Fahrten erforderlich sind, um die Pflanzen mit Verteilgütern in Form von Düngemitteln zu versorgen oder auch, z.B. mittels einer Feldspritze, Pflanzenschutzmittel auszubringen. Folglich besteht zumindest im Bereich der Fahrspuren der Verteilmaschine, sofern diese in Form eines Selbstfahrers oder in Form eines von Radachsen gestützten Nachläufers konzipiert ist, und/oder im Bereich der Fahrspuren einer sie tragenden Zugmaschine, wie eines Traktors oder dergleichen, kein Bedarf an einem Ausbringen von Verteilgut, weil in diesen Bereichen ohnehin keine Nutzpflanzen kultiviert werden können. Die Erfindung sieht daher vor, zumindest in den Bereichen der Fahrspuren, bei welchen es sich üblicherweise um zwei parallele, entlang der Fahrgassen verlaufende, streifenförmige Bereiche handelt, deren Breite durch die Gesamtbreite der durch die linken bzw. rechten Reifen der Verteilmaschine selbst und/oder der sie tragenden Zugmaschine vorgegeben ist, die dort hinstreuenden Verteilorgane mit einer gegenüber der Soll-Verteilungsmenge zumindest reduzierten Verteilungsmenge an Verteilgut zu versorgen, wobei gefunden wurde, dass mit der erfindungsgemäßen Maßnahme eine Einsparung an Verteilgut im Bereich von etwa 3% bis etwa 5% gegenüber dem Stand der Technik erzielt werden kann. Bei den in diese streifenförmige Bereiche einstreuenden Verteilorgane kann es sich in der Praxis um je ein Verteilorgan handelt, sofern dieses mehr oder minder genau oberhalb des streifenförmigen Bereichs angeordnet ist, zumeist jedoch um zwei benachbarte Verteilorgane, deren Streufächer in diesen streifenförmigen Bereich einander teilweise überlappen. Um für eine größtmögliche Einsparung an Verteilgut erreichen zu können, kann es dabei selbstverständlich zweckmäßig sein, wenn auf die Fahrgassen zumindest im Bereich der Fahrspuren der Verteilmaschine und/oder im Bereich der Fahrspuren der sie tragenden Zugmaschine im Wesentlichen gar kein Verteilgut ausgebracht wird.

Um die Verteilungsbreite des jeweiligen Verteilorgans um die Breite der Fahrspur oder deren Abschnittes - also quer zur Fahrtrichtung der Verteilmaschine - zu verschmälern, sieht die Erfindung dabei vor, dass einem jeweiligen Verteilorgan, in dessen Verteilungsbreite sich eine Fahrspur oder ein Abschnitt einer Fahrspur befindet, eine Begrenzungseinrichtung zugeordnet wird. Die Begrenzungseinrichtungen dienen folglich zur Ablenkung des von den jeweiligen Verteilorganen verteilten Streufächers von derjenigen Fahrspur fort, welche andernfalls in die Verteilungsbreite dieses Streufächers fiele, so dass der jeweilige Streufächer an seiner der Fahrspur zugewandten Seite "abgeschnitten" wird.

Bei einer zur Durchführung des erfindungsgemäßen Verfahrens eingerichteten pneumatischen Verteilmaschine ist folglich ein jeweiliges Verteilorgan, in dessen Verteilungsbreite sich eine Fahrspur oder ein Abschnitt (bzw. ein "Teilstreifen") einer Fahrspur befindet, mit einer Begrenzungseinrichtung versehen, um die Verteilungsbreite des jeweiligen Verteilorgans um die Fahrspur oder um deren Abschnitt zu verschmälern.

Die Begrenzungseinrichtungen können dabei insbesondere hinsichtlich ihrer Anordnung relativ zu einem jeweiligen Verteilorgan in Abhängigkeit wenigstens eines Parameters aus der Gruppe
- Breite der durch die Reifenbreite (der Verteilmaschine selbst und/oder der sie tragenden Zugmaschine) vorgegebenen Fahrspuren;
- seitlicher Abstand der Fahrspuren in Bezug auf die Verteilorgane (welcher für die Überlappung der Verteilungsbreite eines der Fahrspur benachbarten Verteilorgans mit einer jeweiligen Fahrspur maßgeblich ist);
- Abstand der Verteilorgane vom Boden (welcher insbesondere von der Anbauhöhe der Verteilorgane am Ausleger der Verteilmaschine sowie im Falle einer als Anbaugerät ausgestalteten Verteilmaschine von der eingestellten Höhe des Dreipunkt-Krafthebers der die Verteilmaschine tragenden Zugmaschine abhängt);
- Abstand der Verteilorgane voneinander (entsprechend der Teilbreiten der Verteilorgane);
- Geometrie der Begrenzungseinrichtungen; und
- physikalische Eigenschaften des Verteilgutes oder einer Gruppe von Verteilgütern (z.B. insbesondere der Flugeigenschaften eines Verteilguttyps oder Gruppen von Verteilguttypen); und
- Massenstrom an Verteilgut (z.B. in Abhängigkeit des voreingestellten Soll-Massenstromes oder insbesondere in Abhängigkeit des Ist-Massenstrom an Verteilgut, welcher beispielsweise in als solcher bekannter Weise sensorisch ermittelt werden kann, wie z.B. mittels eines im Antriebsstrang der Verteilerscheibe(n) vorgesehenen Drehmomentsensors oder dergleichen)
   eingestellt werden, wobei die Begrenzungseinrichtungen insbesondere manuell und/oder automatisch eingestellt werden können. Auf diese Weise lassen sich den verschiedenen, einerseits durch die baulichen Gegebenheiten und die Betriebsweise der Verteilmaschine, andererseits durch die Eigenschaften des Verteilgutes bedingten Parametern Rechnung tragen, um für eine möglichst genaue Aussparung der Fahrspuren von den benachbarten, mit Verteilgut versorgten Bodenbereichen zu sorgen, ohne eine Unter- oder Überversorgung derjenigen Bodenbereiche zu erzeugen, in welchen ein Versorgungsbedarf besteht.

Während die Begrenzungseinrichtungen grundsätzlich auch durch im Wesentlichen translatorische Verlagerung derselben in Abhängigkeit der vorgenannten Parameter eingestellt werden können, kann es sowohl aus konstruktiven Gründen als auch im Hinblick auf eine einfache und reproduzierbare, aber gleichwohl wirksame Ausrichtung derselben zweckmäßig sein, dass die Begrenzungseinrichtungen dadurch eingestellt werden, dass sie um wenigstens eine, insbesondere um genau eine, Schwenkachse verschwenkt werden, um ihre Verteilungsbreite quer zur Fahrtrichtung in dem erforderlichen Maße zu verringern.

Wie bereits erwähnt, können die Begrenzungseinrichtungen können grundsätzlich manuell und/oder automatisch eingestellt werden, wobei es auch im Falle einer automatischen Einstellung der Begrenzungseinrichtungen von Vorteil sein kann, wenn sie - zusätzlich - manuell eingestellt werden können, um im Störungsfall für eine manuelle Notbetätigung zu sorgen. Die Begrenzungseinrichtungen können dabei insbesondere automatisch mittels einer Verstelleinrichtung eingestellt werden, welche ein, insbesondere fernbedienbares, motorisches und/oder aktuatorisches Stellglied umfasst.

Die Begrenzungseinrichtungen einer erfindungsgemäßen pneumatischen Verteilmaschine können folglich vorzugsweise verstellbar an den Verteilorganen oder an diesen zugeordneten Trägern angeordnet sein, wobei sie aus den vorgenannten Gründen insbesondere um wenigstens eine, vorzugsweise um genau eine, Schwenkachse verschwenkbar sind.

Wie oben erwähnt, können die Begrenzungseinrichtungen dabei manuell und/oder mittels einer Verstelleinrichtung automatisch verstellbar sein, wobei die Verstelleinrichtung ein, insbesondere fernbedienbares, motorisches und/oder aktuatorisches Stellglied umfasst, wie beispielsweise ein Hydro- oder Elektromotor oder eine Kolben-/Zylindereinheit, z.B. in Form eines Elektro- oder Hydraulikzylinders.

Sofern die Begrenzungsrichtungen automatisch mittels einer Verstelleinrichtung eingestellt werden, so kann letztere vorteilhafterweise mit einer Steuer- und/oder Regeleinrichtung der Verteilmaschine wirkverbunden werden, welche die Begrenzungseinrichtungen in Abhängigkeit wenigstens eines Parameters aus der Gruppe
- Breite der durch die Reifenbreite vorgegebenen Fahrspuren;
- seitlicher Abstand der Fahrspuren in Bezug auf die Verteilorgane;
- Abstand der Verteilorgane vom Boden;
- Abstand der Verteilorgane voneinander;
- Geometrie der Begrenzungseinrichtungen;
- physikalische Eigenschaften des Verteilgutes oder einer Gruppe von Verteilgütern; und
- Massenstrom an Verteilgut
einstellt, wobei zumindest einer dieser Parameter
- in einer der Steuer- und/oder Regeleinrichtung zugeordneten Speichereinrichtung hinterlegt und/oder
- in eine der Steuer- und/oder Regeleinrichtung zugeordnete Eingabeeinrichtung eingegeben und/oder
- sensorisch ermittelt
   wird. So können beispielsweise verschiedene Reifenbreiten der selbstfahrenden oder gezogenen Verteilmaschine und/oder der oder verschiedener Zugmaschine(n) in der Speichereinrichtung hinterlegt und mittels der Eingabeeinrichtung ausgewählt werden, oder es wird eine jeweilige Reifenbreite direkt in die Eingabeeinrichtung eingegeben. Alternativ oder zusätzlich können beispielsweise die seitlichen Abstände der Fahrspuren von den Verteilorganen in die Eingabeeinrichtung eingegeben werden. Ferner ist es denkbar, dass der Abstand der Verteilorgane vom Boden, welcher die Verteilungsbreite eines jeweiligen Verteilorgans maßgeblich beeinflusst, in die Eingabeeinrichtung eingegeben oder auch mittels der Verteilmaschine zugeordneter Sensoren, wie als solche aus dem Stand der Technik bekannte, zur Abstandsmessung geeigneter Sensoren, sensorisch erfasst wird, was insbesondere im Falle einer Höhenverstellbarkeit der Ausleger samt Verteilorganen oder bei einer als Anbaugerät ausgestalteten Verteilmaschine zweckmäßig sein kann, deren Anbauhöhe von der Stellung des Dreipunkt-Krafthebers der Zugmaschine abhängt. Darüber hinaus können z.B. verschiedene, den Teilbreiten der Verteilorgane entsprechende seitliche Abstände der Verteilorgane voneinander in die Eingabeeinrichtung eingegeben und/oder in der Speichereinrichtung hinterlegt und ausgewählt werden. Entsprechendes gilt für die geometrischen Abmessungen verschiedener Ausführungsvarianten der Begrenzungseinrichtungen. Überdies können insbesondere auch die physikalischen Eigenschaften des Verteilgutes oder einer Gruppe von Verteilgütern, wie insbesondere deren Flugeigenschaften, welche gleichfalls die Verteilungsbreite eines jeweiligen Verteilorgans maßgeblich beeinflussen können, beispielsweise anhand von Kennwerten in der Speichereinrichtung hinterlegt und mittels der Eingabeeinrichtung ausgewählt werden.

Bei einer erfindungsgemäßen pneumatischen Verteilmaschine kann demnach mit Vorteil vorgesehen sein, dass eine Verstelleinrichtung zur automatischen Verstellung der Begrenzungseinrichtungen mit einer Steuer- und/oder Regeleinrichtung der Verteilmaschine in Verbindung steht, um die Begrenzungseinrichtungen automatisch in Abhängigkeit wenigstens eines der vorgenannten Parameter zu verstellen, wobei zumindest einer dieser Parameter
- in einer der Steuer- und/oder Regeleinrichtung zugeordneten Speichereinrichtung hinterlegt; und/oder
- in eine der Steuer- und/oder Regeleinrichtung zugeordnete Eingabeeinrichtung eingebbar; und/oder
- sensorisch ermittelbar
ist.

Die Begrenzungseinrichtungen der Verteilmaschine können vorzugsweise nach Art von Leitblechen ausgebildet sein, welche zur Verschmälerung der Verteilungsbreite (quer zur Fahrtrichtung) in der Lage sind und insbesondere ein im Wesentlichen U-förmiges Profil aufweisen, an deren U-Steg sich einerseits an seinem einen Ende ein langer U-Schenkel, andererseits an seinem anderen Ende ein kurzer U-Schenkel anschließt. Der U-Steg der Begrenzungseinrichtung erstreckt sich in dem an das üblicherweise nach Art einer Prallplatte bzw. eines Pralltellers ausgestaltete Verteilorgan montierten Zustand vorzugsweise etwa senkrecht zur Ebene des Pralltellers erstreckt. An den U-Steg der Begrenzungseinrichtung kann sich dabei, insbesondere jeweils unter einem etwa rechten Winkel, einerseits an der oberen Seite der lange U-Schenkel, andererseits an der unteren Seite der kurze U-Schenkel anschließen, so dass die U-Schenkel der Begrenzungseinrichtung im montierten Zustand insbesondere in zur Ebene des Pralltellers bzw. der Prallplatte etwa parallelen Ebenen angeordnet sind. Auf diese Weise wird zuverlässig verhindert, dass die von der Begrenzungseinrichtung abprallenden Verteilgutpartikel bis in die Teilbreiten benachbarter Verteilorgane hinein reflektiert werden und dort eine Überversorgung an Verteilgut bewirken.

In weiterhin vorteilhafter Ausgestaltung des erfindungsgemäßen Verfahrens kann vorgesehen sein, dass ein jeweiliges Verteilorgan, in dessen Verteilungsbreite sich eine Fahrspur oder ein Abschnitt einer Fahrspur befindet, mittels eines jeweiligen Axialabschnittes der Dosierwalze des Dosierorgans, welchem die Übergabekammer zugeordnet ist, deren Verteilerleitung dieses Verteilorgan mit dosiertem Verteilgut versorgt, mit einem gegenüber dem Soll-Massenstrom an Verteilgut verminderten Massenstrom an Verteilgut versorgt wird.

Der Massenstrom an Verteilgut, mit welchem ein jeweiliges Verteilorgan, in dessen Verteilungsbreite sich eine Fahrspur oder ein Abschnitt einer Fahrspur befindet, mit Verteilgut versorgt wird, sollte dabei vorzugsweise entsprechend der Breite der Fahrspur oder deren Abschnittes, welche mit seiner Verteilungsbreite überlappt, vermindert werden, wobei insbesondere die Querverteilung an Verteilgut über die Verteilungsbreite dieses Verteilorgans berücksichtigt werden kann, welche in aller Regel nicht linear, sondern im Wesentlichen in Form einer Gaußverteilung vorliegt. Auf diese Weise wird dem von dem Verteilorgan, dessen Verteilungsbreite zumindest mit einem Abschnitt einer Fahrspur überlappt, versorgten Bodenbereich jenseits der Fahrspur stets die gewünschte Soll-Verteilungsmenge zugeführt.

Gemäß einer Ausführungsform des erfindungsgemäßen Verfahrens kann zur Verminderung des Massenstromes an Verteilgut eines jeweiligen Verteilorgans, in dessen Verteilungsbreite sich eine Fahrspur oder ein Abschnitt einer Fahrspur befindet, vorgesehen sein, dass der dem Verteilorgan zugeordnete Axialabschnitt der Dosierwalze des Dosierorgans mit wenigstens einem Blindring, welcher keine Dosierfunktion besitzt, versehen wird, dessen axiale Breite entsprechend dem Anteil an Verteilgut gewählt wird, um welchen der Massenstrom an Verteilgut verringert werden soll, wobei insbesondere
- eine Dosierwalze mit einer Mehrzahl an gegenüber dem Axialabschnitt der Dosierwalze schmaleren, gemeinsam rotierbar angetriebenen Dosierradringen verwendet wird, (vgl. hierzu beispielsweise die eingangs zitierte EP 2 786 649 A2), von welchen zumindest einer gegen wenigstens einen Blindring ausgetauscht wird; oder
- wenigstens ein Blindring derart auf einen Teilabschnitt des Axialabschnittes der Dosierwalze aufgebracht wird, dass er diesem Teilabschnitt überdeckt.

Die Anzahl der je nach Art des Verteilgutes z.B. als Zellen- oder Nockenradringe ausgebildeten Dosierradringe, welche im erstgenannten Fall gegen die Blindringe ohne jedwede Dosierfunktion ausgetauscht werden, sollte dabei aus den vorgenannten Gründen wiederum zweckmäßigerweise entsprechend der Überlappung der Verteilungsbreite des Verteilorgans mit der jeweiligen Fahrspur gewählt werden. Entsprechendes gilt für die axiale Breite des Teilabschnittes desjenigen Axialabschnittes der Dosierwalze, welcher im letztgenannten Fall mit dem oder den Blindring(en) ohne jedwede Dosierfunktion überdeckt wird, welche z.B. die Zellenradkammern bzw. die Nockentäler dieses Axialabschnittes der Dosierwalze überdeckenden.

Bei einer zur Durchführung der vorgenannten Ausführungsform des erfindungsgemäßen Verfahrens eingerichteten pneumatischen Verteilmaschine kann folglich vorgesehen sein, dass zur Verminderung des Massenstromes an Verteilgut eines jeweiligen Verteilorgans, in dessen Verteilungsbreite sich eine Fahrspur oder ein Abschnitt einer Fahrspur befindet, der dem Verteilorgan zugeordnete Axialabschnitt der Dosierwalze des Dosierorgans mit wenigstens einem Blindring, welcher keine Dosierfunktion besitzt, versehen ist, dessen axiale Breite entsprechend dem Anteil an Verteilgut gewählt ist, um welchen der Massenstrom an Verteilgut verringert werden soll, wobei insbesondere
- die Dosierwalze eine Mehrzahl an gegenüber dem Axialabschnitt der Dosierwalze kleineren, gemeinsam rotierbar angetriebenen Dosierradringen aufweist, von welchen zumindest einer von wenigstens einem Blindring gebildet ist; oder
- wenigstens ein Blindring derart auf einen Teilabschnitt des Axialabschnittes der Dosierwalze aufgebracht ist, dass er diesen Teilabschnitt überdeckt.

Gemäß einer anderen Ausführungsform des erfindungsgemäßen Verfahrens kann zur Verminderung des Massenstromes an Verteilgut eines jeweiligen Verteilorgans, in dessen Verteilungsbreite sich eine Fahrspur oder ein Abschnitt einer Fahrspur befindet, stattdessen vorgesehen sein, dass ein Dosierorgan mit einer Dosierwalze verwendet wird, deren Axialabschnitte von unabhängig voneinander rotierbar angetriebenen Dosierradsegmenten gebildet sind, wobei das jeweilige, dem jeweiligen Verteilorgan zugeordnete Dosierradsegment der Dosierwalze mit einer gegenüber der zur Dosierung des Soll-Massenstromes an Verteilgut vorgesehenen Soll-Drehzahl verminderten Drehzahl angetrieben wird, welche entsprechend dem Anteil an Verteilgut gewählt wird, um welchen der Massenstrom an Verteilgut verringert werden soll. Die reduzierte Verteilungsmenge an Verteilgut, mit welchem ein jeweiliges Verteilorgan versorgt wird, dessen Verteilungsbreite mit einer Fahrspur überlappt, wird in diesem Fall folglich durch eine entsprechend verringerte Drehzahl des diesem Verteilorgan zugeordneten Dosierradsegmentes des Dosierwalze bewirkt. In diesem Zusammenhang kann ein jeweiliger Antrieb eines jeweiligen Dosierradsegmentes der Dosierwalze zweckmäßigerweise mit einer Steuer- und/oder Regeleinrichtung der Verteilmaschine wirkverbunden werden, mittels welcher ein jeweiliges, einem jeweiligen Verteilorgan, in dessen Verteilungsbreite sich eine Fahrspur oder ein Abschnitt einer Fahrspur befindet, zugeordnetes Dosierradsegment der Dosierwalze mit einer jeweiligen, gegenüber der zur Dosierung des Soll-Massenstromes an Verteilgut vorgesehenen Soll-Drehzahl verminderten Drehzahl angetrieben wird.

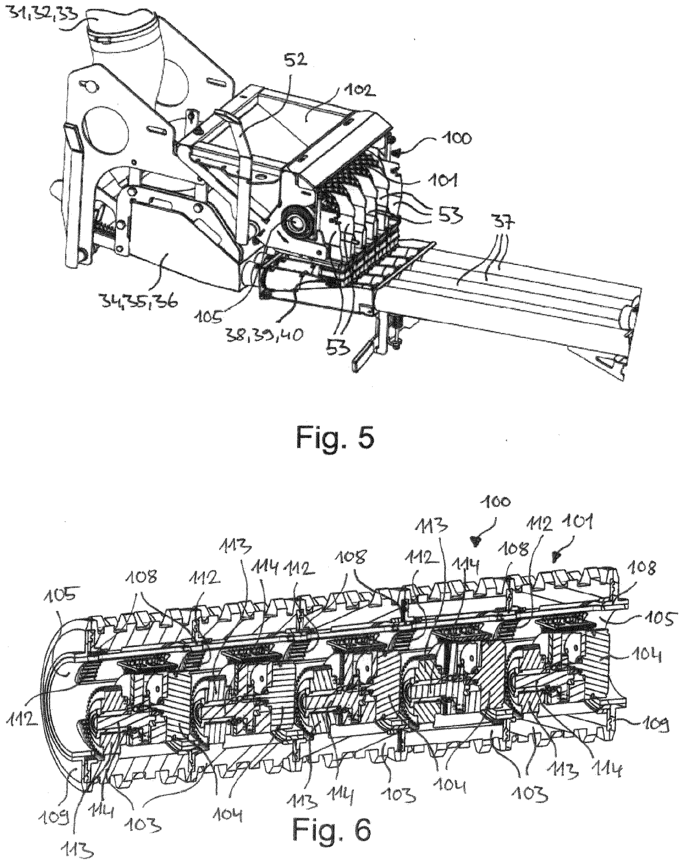

Bei einer zur Durchführung der vorgenannten Ausführungsform des erfindungsgemäßen Verfahrens eingerichteten pneumatischen Verteilmaschine kann folglich vorgesehen sein, dass zur Verminderung des Massenstromes an Verteilgut eines jeweiligen Verteilorgans, in dessen Verteilungsbreite sich eine Fahrspur oder ein Abschnitt einer Fahrspur befindet, die Axialabschnitte der Dosierwalze des Dosierorgans von unabhängig voneinander rotierbar angetriebenen Dosierradsegmenten gebildet sind, so dass das jeweilige, dem jeweiligen Verteilorgan zugeordnete Dosierradsegment der Dosierwalze mit einer gegenüber der zur Dosierung des Soll-Massenstromes an Verteilgut vorgesehenen Soll-Drehzahl verminderten Drehzahl antreibbar ist. Ein jeweiliger Antrieb eines jeweiligen Dosierradsegmentes der Dosierwalze kann dabei insbesondere mit einer Steuer- und/oder Regeleinrichtung der Verteilmaschine in Verbindung stehen, um ein jeweiliges, einem jeweiligen Verteilorgan, in dessen Verteilungsbreite sich eine Fahrspur oder ein Abschnitt einer Fahrspur befindet, zugeordnetes Dosierradsegment der Dosierwalze mit einer jeweiligen, gegenüber der zur Dosierung des Soll-Massenstromes an Verteilgut vorgesehenen Soll-Drehzahl verminderten Drehzahl anzutreiben. In Bezug auf vorteilhafte konstruktive Ausgestaltungen eines solchen Dosierorgans mit einer Dosierwalze, welche eine Mehrzahl an unabhängig voneinander rotierbar angetriebenen Dosierradsegmenten umfasst, sei ausdrücklich auf die weiter unten unter Bezugnahme auf die Fig. 5 bis 11 erläuterten Merkmale verwiesen, welche das Dosierorgan jeweils einzeln oder in beliebiger Kombination aufweisen kann.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische perspektivische Ansicht einer Ausführungsform einer erfindungsgemäßen pneumatischen Verteilmaschine zum Ausbringen von Verteilgut, welche als Nachläufer ausgestaltet ist;
- Fig. 2: eine schematische perspektivische Ansicht der Tragkonstruktion der pneumatischen Verteilmaschine gemäß Fig. 1;
- Fig. 3: eine schematische perspektivische Ansicht der Luftführung der pneumatischen Verteilmaschine gemäß Fig. 1 und 2;
- Fig. 4: einen schematischen Längsschnitt der pneumatischen Verteilmaschine gemäß Fig. 1 bis 3;
- Fig. 5: eine schematische perspektivische Detailansicht der pneumatischen Verteilmaschine gemäß Fig. 1 bis 4 im Bereich eines ihrer Dosierorgane gemäß einer ersten Ausführungsvariante desselben, dergemäß das Dosierorgan eine Dosierwalze mit einer Mehrzahl an unabhängig voneinander rotierbar angetriebenen Dosierradsegmenten aufweist;
- Fig. 6: eine schematische perspektivische Schnittansicht der Dosierwalze des Dosierorgans gemäß Fig. 5;
- Fig. 7: einen schematischen Längsschnitt durch die Dosierwalze des Dosierorgans gemäß Fig. 6;
- Fig. 8: eine schematische Querschnittansicht der Dosierwalze entlang der Schnittebene VIII-VIII gemäß Fig. 7;
- Fig. 9: einen dem Längsschnitt der Fig. 7 entsprechenden Detailschnitt der Dosierwalze gemäß Fig. 7 und 8 im Bereich der Lagerung zweier in Axialrichtung benachbarter Dosierradsegmente der Dosierwalze;
- Fig. 10: eine schematische perspektivische Detailansicht eines zur Lagerung der Dosierradsegmente der Dosierwalze gemäß Fig. 6 bis 9 dienenden, im Wesentlichen rohrförmigen Hohlkörpers mit hierin aufgenommenen Antrieben der Dosierradsegmente;
- Fig. 11: eine schematische perspektivische Detailansicht des im Wesentlichen rohrförmigen Hohlkörpers gemäß Fig. 10 ohne die Antriebe der Dosierradsegmente;
- Fig. 12: eine im Wesentlichen der Fig. entsprechende schematische perspektivische Detailansicht der pneumatischen Verteilmaschine gemäß Fig. 1 bis 4 im Bereich eines ihrer Dosierorgane gemäß einer zweiten Ausführungsvariante desselben, dergemäß das Dosierorgan eine Dosierwalze mit einer Mehrzahl an gemeinsam rotierbar angetriebenen Dosierradringen aufweist;
- Fig. 13: eine schematische perspektivische Detailansicht der Dosierwalze des Dosierorgans gemäß Fig. 12, von welcher ein Dosierradring gegen einen Blindring ohne Dosierfunktion ausgetauscht worden ist;
- Fig. 14: eine schematische perspektivische Detailansicht eine Abschnittes eines Auslegers der pneumatischen Verteilmaschine gemäß Fig. 1 bis 4 mit mehreren, unter seitlichem Abstand voneinander angeordneten und von je einer Förderleitung mit Teilmassenströmen an dosiertem Verteilgut versorgten Verteilorganen in Form von Pralltellern bzw. Prallplatten, wobei zwei Verteilorgane mit Begrenzungseinrichtungen versehen worden sind;
- Fig. 15: eine der Fig. 14 entsprechende schematische Detailansicht der mit den Begrenzungseinrichtungen versehenen Verteilorgane;
- Fig. 16: schematische perspektivische Detailansichten der Begrenzungseinrichtungen gemäß Fig. 14 und 15;
- Fig. 17: eine schematische Ansicht der beiden inneren Abschnitte zweier sich jeweils seitlich zur Fahrtrichtung erstreckender Ausleger gemäß Fig. 14 und 15 der pneumatischen Verteilmaschine gemäß Fig. 1 bis 4 zur Veranschaulichung des Normalstreuens; und
- Fig. 18: eine der Fig. 17 entsprechende schematische Ansicht zur Veranschaulichung eines erfindungsgemäß möglichen Streumodus', bei welchem die Fahrgassen der pneumatischen Verteilmaschine zumindest im Bereich deren Fahrspuren ausgespart werden.

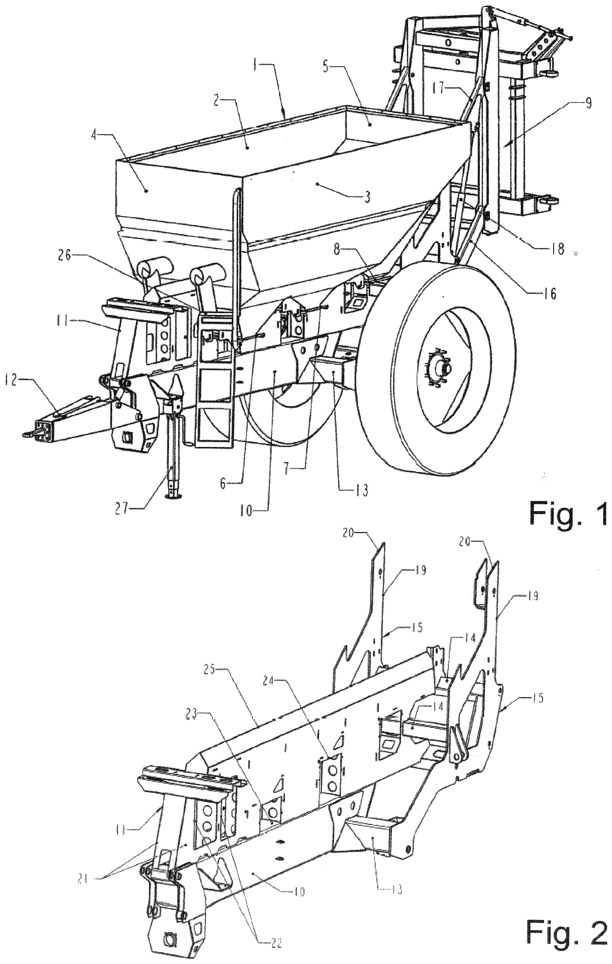

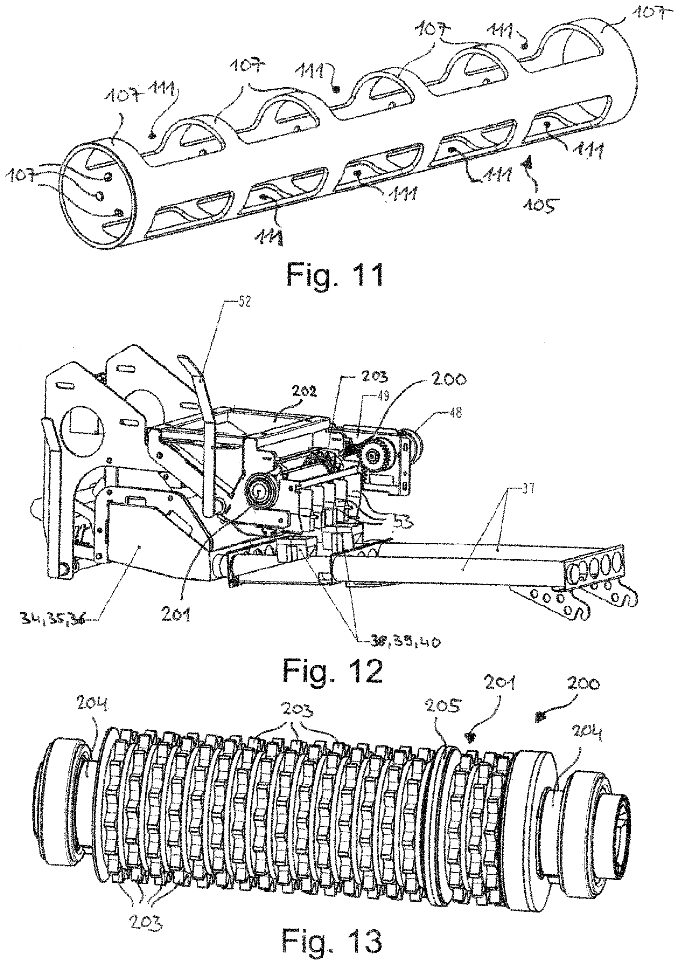

In der Fig. 1 ist ein Ausführungsbeispiel einer pneumatischen Verteilmaschine in Form eines von einer Zugmaschine, wie einem Traktor, gezogenen einachsigen Nachläufers exemplarisch wiedergegeben, welche als pneumatischer Streuer für pulver- oder partikelförmiges Verteilgut, wie Dünger und/oder Saatgut, ausgebildet ist. In Bezug auf die in der Fig. 1 aus Veranschaulichungsgründen nicht dargestellten, sich quer zur Fahrtrichtung erstreckenden Ausleger mit den zu den einzelnen Verteilorganen führenden Förderleitungen sei auf die Ausführungen weiter unten unter Bezugnahme auf die Fig. 13 ff verwiesen. Die Räder des Nachläufers sind mit Reifen einer bestimmten Reifenbreite bereift, innerhalb deren Fahrspuren auf einem Feld ein Ausbringen des Verteilgutes verhindert werden soll, wenn der Nachläufer entlang auf einem Feld angelegter Fahrgassen gezogen wird. Sofern die Radreifen der nicht dargestellten Zugmaschine breiter sind als die Reifen des Nachläufers und/oder die Zugmaschine eine demgegenüber unterschiedliche Achsbreite besitzt, so ergeben sich die Fahrspuren, innerhalb derer ein Ausbringen von Verteilgut verhindert werden soll, aus den jeweiligen Gesamtbreiten der Reifen sowohl der Zugmaschine als auch des Nachläufers.

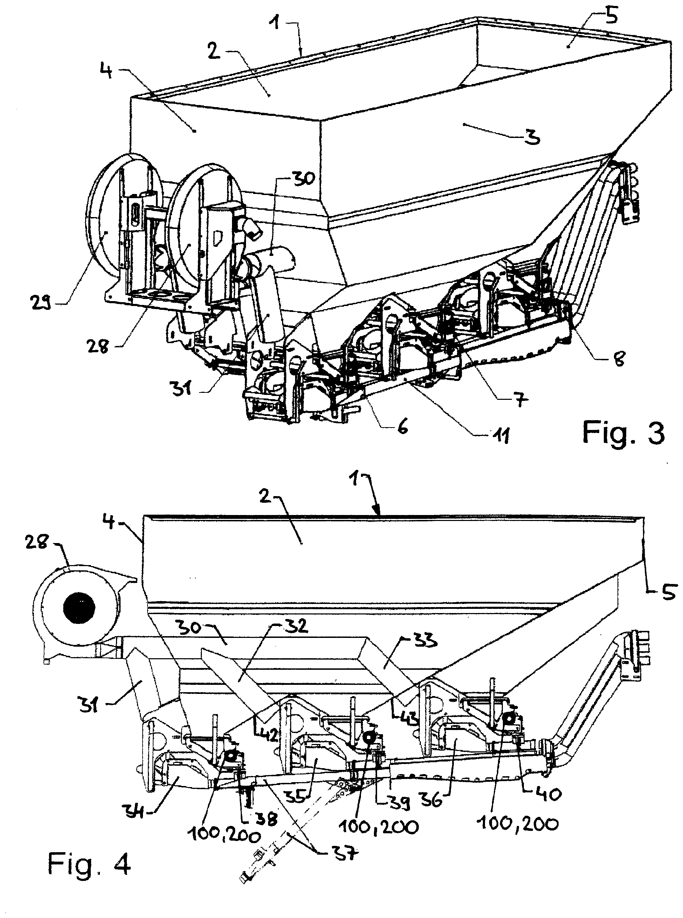

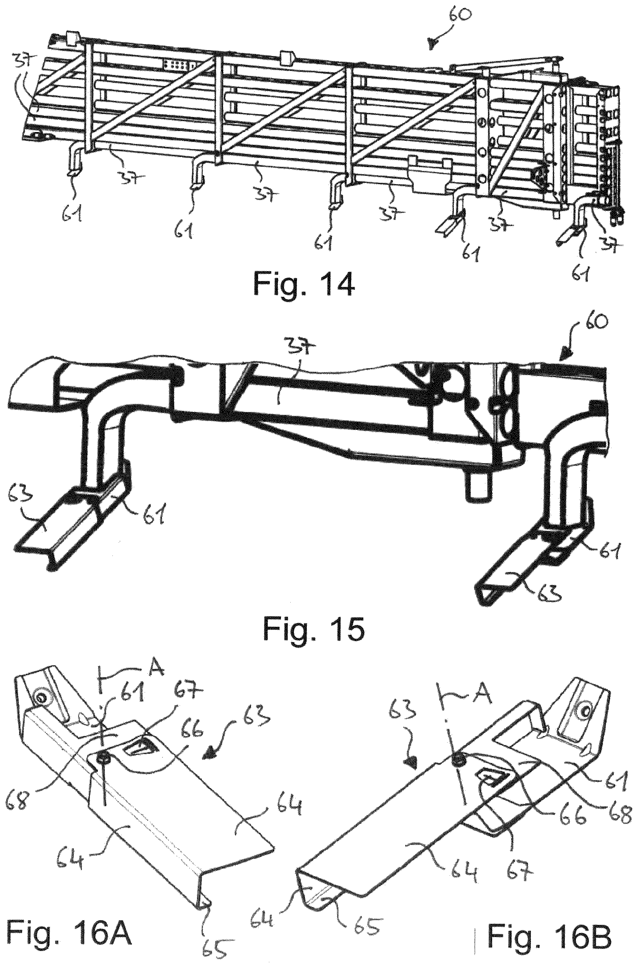

Die Verteilmaschine weist einen Vorratsbehälter 1 zur Aufnahme des Verteilgutes auf, dessen seitlichen 2, 3, vorderen 4 und rückwärtigen Wände 5 sich im unteren Bereich nach innen zu einer Bodenmulde verjüngen, welche beidseits der Längsachse des Vorratsbehälters 1 Austrittsöffnungen 6, 7, 8 aufweist, welchen jeweils ein Dosierorgan (vgl. die Bezugszeichen 100 bzw. 200 der Fig. 4) zugeordnet ist, von welchem zwei Ausführungsvarianten weiter unten einerseits unter Bezugnahme auf die Fig. 5 bis 11, andererseits unter Bezugnahme auf die Fig. 12 und 13 im Einzelnen erläutert sind. Im vorliegenden Fall sind z.B. jeweils drei, also insgesamt sechs Austrittsöffnungen 6, 7, 8 an jeder Seite des Vorratsbehälters 1 vorgesehen, welche mit jeweils einem Dosierorgan 100 bzw. 200 versehen sind. Die in der Fig. 1 nicht im Einzelnen erkennbaren Dosierorgane 100 bzw. 200 sind beispielsweise in unterschiedlicher Höhe angeordnet und versorgen jeweils eine Mehrzahl an Förderleitungen mit dem dosierten Verteilgut, wobei die Förderleitungen jeweils zu Paketen zusammengefasst sind und zunächst nach hinten zu einem Hubrahmen 9 geführt und sodann nach außen umgelenkt sind. Der Hubrahmen 9 nimmt die in der Fig. 1 nicht gezeigten Ausleger (vgl. die Fig. 14 und 15) auf, welche sich zu beiden Seiten im Wesentlichen senkrecht zur Fahrtrichtung erstrecken. Jeder Ausleger ist dabei zweckmäßigerweise schwenkbar an dem Hubrahmen 9 angelenkt und mehrgelenkig ausgeführt, so dass einzelne Auslegerabschnitte gemeinsam mit den Förderleitungen aus einer nach außen gestreckten Betriebsposition in eine zusammengeklappte Ruhe- bzw. Fahrtposition angeklappt werden können. Die von den Auslegern aufgenommenen Förderleitungen enden in unterschiedlichen Abständen von der Längsachse der Verteilmaschine an Verteilorganen, welche als Prallteller bzw. Prallplatten ausgestaltet sind, um den aus den Förderleitungen austretenden Verteilgutstrom in jeweils nebeneinander angeordnete Flächenbereiche auf dem Boden zu verteilen (vgl. die Fig. 14 bis 18).

Wie weiterhin der Fig. 1 und insbesondere der Fig. 2 zu entnehmen ist, ist der Vorratsbehälter 1 von einem Tragrahmen aufgenommen, welcher im vorliegenden Fall eine zentrale Strebe 10, z.B. in Form eines Rechteckrohres, aufweist, an dessen Oberseite ein Aufbau 11 festgelegt ist, welcher beispielsweise eine tunnelförmige Gestalt besitzt. Am vorderen Ende der Strebe 10 ist eine Deichsel 12, beispielsweise federnd, angebracht, während am hinteren Ende ein Achsrahmen 13 festgelegt ist. Am hinteren Ende des Aufbaus 11 ist eine Tragkonstruktion angebracht, welche aus Quertraversen 14 sowie diese an ihren Enden verbindenden Seitenwangen 15 gebildet ist. An den beiden Seitenwangen 15 sind Lenker 16, 17 gelagert, welche mit ihrem anderen Ende an dem Hubrahmen 9 angelenkt sind und mittels Hubstützen 18, z.B. in Form von Hydraulikzylindern, den Hubrahmen 9 anheben und absenken können. Die sich nach oben ersteckenden Abschnitte 19 der Seitenwangen 15 stützen mittels ihrer abgeschrägten Enden 20 die geneigte Rückwand 5 des Vorratsbehälters 1 ab. Der beim gezeigten Ausführungsbeispiel tunnelförmige Aufbau 11 weist an seinen Seitenwänden 21 z.B. Montageöffnungen 22, 23 und Halterungen 24 zur Anordnung von Funktionsteilen auf, wobei die Halterungen 24 die weiter unten näher beschriebenen Dosierorgane einschließlich deren Antriebe aufnehmen. Innerhalb des tunnelförmigen Aufbaus 11 können die Versorgungsleitungen, wie Hydraulikleitungen und/oder elektrische Leitungen, verlegt sein. An seiner Oberseite ist der Aufbau 11 nach Art eines nach oben spitz zulaufenden Giebels 25 ausgebildet, welcher gemeinsam mit seinen Seitenwänden 21 eine Trennwand in dem Vorratsbehälter 1 bildet. Der Giebel 25 leitet das in dem Vorratsbehälter 1 befindliche Verteilgut zu den rechts und links hiervon angeordneten Austrittsöffnungen 6, 7, 8 des Vorratsbehälters 1 mit den diesen nachgeordneten Dosierorganen 100 bzw. 200 ab. An dem Aufbau 25 kann ferner z.B. ein Aufstiegspodest 26 angeordnet sein, welches über eine Leiter zugänglich ist. Ferner ist an der Strebe 10 ein Abstellfuß 27 schwenkbar befestigt.

Wie insbesondere auf den Fig. 3 und 4 hervorgeht, sind vor der Vorderwand 4 des Vorratsbehälters 1 zwei Gebläse 28, 29 angeordnet, welche zur Erzeugung eines Luftförderstromes zum Transport des mittels der Dosierorgane 100 bzw. 200 dosierten Verteilgutes durch die Förderleitungen dienen und aus Platzgründen beispielsweise mit ihrer Achse quer zur Fahrtrichtung angeordnet sind. Die Druckleitung 30 eines jeden Gebläses 28, 29 ist z.B. durch den Vorratsbehälter 1 hindurch geführt und weist je einen, einem jeden Dosierorgan 100 bzw. 200 zugeordneten Abgang 31, 32, 33 auf, welcher stromauf eines jeweiligen Dosierorgans 100 bzw. 200 an einen jeweiligen Luftverteiler 34, 35, 36 mündet, beispielsweise mittels nicht zeichnerisch wiedergegebener Schlauchleitungen. Letzterer teilt die Druckluft auf die einem jeden Dosierorgan 100 bzw. 200 zugeordnete Anzahl an Förderleitungen 37 auf, von welchen in der Fig. 4 aus Veranschaulichungsgründen nur die vorne liegenden Förderleitungen 37 gezeigt sind. Unmittelbar stromab eines jeden Luftverteilers 34, 35, 36 ist jeder Förderleitung 37 eine Übergabekammer 38, 39, 40 zugeordnet, welche in üblicher Weise mit einem eine Düse und einen Diffusor umfassenden Injektor (nicht gezeigt) ausgestattet sein kann und in welche das dosierte Verteilgut von dem jeweiligen Dosierorgan 100 bzw. 200 übergeben wird. Während die von dem Gebläse 28 beaufschlagten Förderleitungen 37 in den in Fahrtrichtung linken Ausleger führen, führen die von dem Gebläse 29 versorgten Förderleitungen 37 in den in Fahrtrichtung rechten Ausleger (vgl. auch die Fig. 14 ff). Die Anzahl an einem jeden Dosierorgan 100 bzw. 200 zugeordneten Förderleitungen 37 entspricht der relativ großen Breite einer üblichen Teilbreitenschaltung während des Betriebs. Die Förderleitungen 37 können ferner zwischen den Dosierorganen 100 bzw. 200 als getrennte Abschnitte ausgebildet sein, um einen Abschnitt derselben, z.B. gemeinsam mit einer jeweiligen Übergabekammer 38, 39, 40, nach unten klappen (vgl. die strichlinierte Darstellung der Fig. 4) und auf diese Weise z.B. Abdrehproben durchführen oder den Vorratsbehälter 1 entleeren zu können.

Die Fig. 5 zeigt eine Detailansicht der pneumatischen Verteilmaschine im Bereich einer ersten Ausführungsvariante ihrer Dosierorgane 100, welches eine rotierbar angetriebene Dosierwalze 101 aufweist, welche im vorliegenden Fall beispielsweise nach Art einer Nockenwalze ausgestaltet ist, aber je nach Art des Verteilgutes selbstverständlich auch nach Art einer Zellenradwalze oder in beliebiger anderer bekannter Weise ausgebildet sein kann. Jedes Dosierorgan 100 versorgt dabei eine Mehrzahl an - hier fünf - Förderleitungen 37 und umfasst ein Dosiergehäuse 102, welches unterhalb einer jeweiligen Austrittsöffnung 6, 7, 8 des Vorratsbehälters 1 angeordnet ist (siehe oben) und das Verteilgut bis an die Oberfläche der Dosierwalze 101 zu leiten vermag. Das Dosiergehäuse 102 kann beispielweise mittels eines Hebels 52 nach unten schwenkbar sein, um den Raum unterhalb der Dosierwalze 101 zugänglich zu machen und den Vorratsbehälter 1 entleeren zu können.

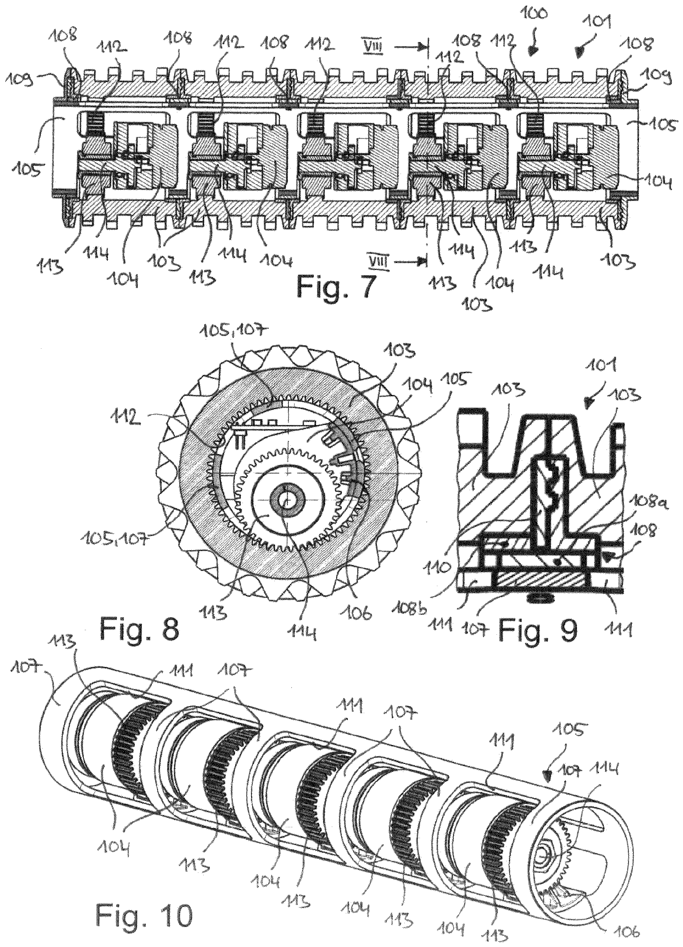

Wie insbesondere den Fig. 6 bis 8 zu entnehmen ist, umfasst die Dosierwalze 101 eines jeden Dosierorgans 100 eine der Anzahl an Förderleitungen 37, welche von dem Dosierorgan 100 versorgt sind, entsprechende Anzahl an - hier fünf - von Dosierradsegmenten 103 gebildeten Axialabschnitte, wobei die Dosierradsegmente 103 unabhängig voneinander rotierbar angetrieben sind. Dies geschieht bei dem gezeigten Ausführungsbeispiel mittels je eines, einem jeweiligen Dosierradsegment 103 zugeordneten, unabhängig voneinander drehzahlsteuer- und/oder regelbaren Elektromotors 104, um sowohl einzelne Dosierradsegmente 103 der Dosierwalze 101 stillsetzen als auch insbesondere die Dosierradsegmente 103 mit unterschiedlichen Rotationsgeschwindigkeiten antreiben zu können. Der zum Antrieb der Dosierradsegmente 103 dienende Elektromotor 104 ist im vorliegenden Fall von einem als Getriebemotor ausgebildeten bürstenlosen Gleichstrommotors ausgestaltet, kann aber grundsätzlich selbstverständlich auch als andersartiger Elektromotor oder als Hydraulikmotor zum Einsatz gelangen. Wie insbesondere auch aus der Detailansicht der Fig. 9 sowie aus der Fig. 10 hervorgeht, sind die Dosierradsegmente 103 der Dosierwalze 101 auf einem sich koaxial zu ihrer Drehachse erstreckenden, im Wesentlichen rohrförmigen Hohlkörper 105 gelagert, welcher starr, aber vorzugsweise lösbar, in dem Dosiergehäuse 102 festgelegt ist und wie er in der Fig. 11 nochmals als solcher dargestellt ist. Die - hier elektrischen - Antriebe 104 der Dosierradsegmente 104 sind vor äußeren Einwirkungen geschützt im Innern des im Wesentlichen rohrförmigen Hohlkörpers 105 aufgenommen und beispielsweise an Befestigungsflanschen 106 im Innern des Hohlkörpers 105 (vgl. die Fig. 8 und 10) verschraubt. Die Befestigungsflansche 106 können dabei z.B. mit dem Innenumfang des Hohlkörpers 105 verschweißt oder mit diesem verschraubt sein (vgl. die Befestigungsbohrungen 107 der Fig. 11).

Der im Wesentlichen rohrförmige Hohlkörper 105 besitzt eine insgesamt etwa kreiszylindrische Form und umfasst im vorliegenden Fall eine Mehrzahl an in Axialrichtung beabstandeter Abschnitte 107, welche sich um seinen gesamten Umfang strecken und zur Aufnahme von an deren Außenumfang aufgebrachten Lagern 108 dienen, mittels welcher ein jedes Dosierradsegment 104 an seinen beiden axialen Enden und in Axialrichtung aneinander angrenzend gelagert ist. Die vollumfänglichen Abschnitte 107 sind dabei einerseits an den beiden Enden des im Wesentlichen rohrförmigen Hohlkörpers 105 vorgesehen, andererseits in äquidistanten Abständen in Axialrichtung desselben, wobei der Axialabstand der vollumfänglichen Abschnitte 107 an die axiale Länge eines jeden Dosierradsegmentes 103 angepasst ist. In der Fig. 9 ist erkennbar, dass die Lager 108 im vorliegenden Fall zwecks Erzielung eines sehr geringen Bauraumes als Gleitlager ausgebildet sind und einerseits eine innere Lagerschale 108a, welche auf dem Außenumfang eines jeweiligen vollumfänglichen Abschnittes 107 des im Wesentlichen rohrförmigen Hohlkörpers 105 sitzt, andererseits eine äußere Lagerschale 108b aufweisen, auf welchen die axialen Enden der Dosierradsegmente 103 sitzen. Im Falle zweier aneinander angrenzender Dosierradsegmente 103 sind die Lager 108 als Zwillingslager ausgebildet und weisen zwei unabhängig voneinander in Bezug auf die innere Lagerschale 108a drehbare äußere Lagerschalen 108b auf, welche das Ende jeweils eines der benachbarten Dosierradsegmente 103 aufnimmt. Alternativ können freilich auch getrennte Lager für jedes Dosierradsegment 103 vorgesehen sein (nicht gezeigt). Die Dosierradsegmente 103 sind auf diese Weise von einem Ende des mit den Lagern 108 bestückten Hohlkörpers 105 her in Axialrichtung auf den Hohlkörper 105 aufschiebbar, wobei an den Enden des im Wesentlichen rohrförmigen Hohlkörpers 105 jeweils ein als Widerlager für die Dosierradsegmente 103 dienender Haltering 109 (vgl. die Fig. 6 und 7) vorgesehen sein kann, von welchen zumindest einer lösbar am Außenumfang des Hohlkörpers 105 befestigbar ist, um die Dosierradsegmente 103 axialfest, aber unabhängig voneinander drehbar sowie vorzugsweise auch gegeneinander austauschbar an dem Hohlkörper 105 zu lagern. In der Fig. 9 ist ferner erkennbar, dass die in Axialrichtung dicht an dicht auf dem im Wesentlichen rohrförmigen Hohlkörper 105 gelagerten Dosierradsegmente 103 an ihren einander zugewandten Stirnseiten mit Gleitringdichtungen 110 - hier in Form von Labyrinthdichtungen - gegeneinander abgedichtet sind, um ein Eindringen von Verteilgut sowie auch von Schmutz und Feuchtigkeit in den die Antriebe 104 aufnehmenden Innenraum des Hohlkörpers 105 zu verhindern.

Der im Wesentlichen rohrförmige Hohlkörper 105 weist zwischen seinen vollumfänglichen Abschnitten 107 jeweils eine oder mehrere Durchgangsöffnungen 111 auf, welche im montierten Zustand der Dosierradsegmente 103 von diesen jeweils übergriffen sind. Die Durchgangsöffnungen 111 des Hohlkörpers 105 dienen zur Verbindung eines jeweiligen Antriebs 104 mit einem jeweiligen Dosierradsegment 103, welches zu diesem Zweck eine sich um einen Innenumfangsabschnitt erstreckende Innenverzahnung 112 aufweist (vgl. die Fig. 6 bis 8), die durch eine jeweilige Durchgangsöffnung 111 des Hohlkörpers 105 freigelassen ist. Die Innenverzahnung 112 eines jeweiligen Dosierradsegmentes 103 steht mit je einem Zahnrad 113 im Eingriff, welches auf je einer, zweckmäßigerweise in Bezug auf die Drehachse der Dosierradsegmente 103 exzentrisch angeordneten Abtriebswelle 114 eines jeweiligen Antriebs 104 sitzt (vgl. insbesondere die Fig. 7 und 8). Wie am besten aus der Fig. 10 hervorgeht, ist jeder aus je einem elektrischen Getriebemotor gebildete Antrieb 104 ferner in einem Gehäuse verkapselt untergebracht, um ihn bestmöglich vor mechanischen Einwirkungen sowie auch vor Schmutz und Feuchtigkeit zu schützen.

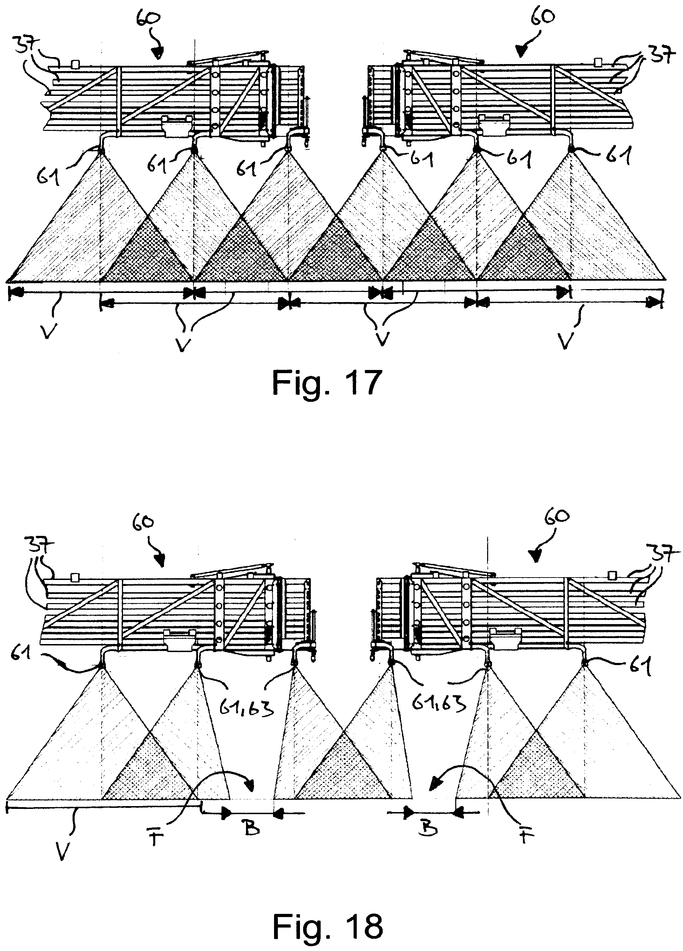

Darüber hinaus kann einem jeden Dosierradsegment 103 z.B. ein nicht zeichnerisch dargestellter Positionserfassungssensor, wie ein Drehzahlsensor oder dergleichen, zugeordnet sein, welcher ebenso wie die Antriebe 104 mit einzelnen oder gemeinsamen Steuermodulen einer gleichfalls nicht zeichnerisch wiedergegebenen Steuer- und/oder Regeleinrichtung der Verteilmaschine in Wirkverbindung steht, um die einzelnen Dosierradsegmente 103 der Dosierwalzen 101 der Dosierorgane 100 unabhängig voneinander drehzahlsteuern und/oder -regeln zu können und dabei einerseits eine sehr genaue Verteilung des Verteilgutes auf dem Feld gemäß Applikationskarten sicherzustellen, wobei die Position der Verteilmaschine auf dem Feld mittels bekannter Positionserfassungssysteme, wie GPS oder dergleichen, in Echtzeit ermittelt werden kann. Andererseits dient die Steuer- und/oder Regeleinrichtung insbesondere zur genauen Drehzahlsteuerung derjenigen Dosierradsegmente 103 der Dosierwalzen 101, deren Massenstrom an Streugut aufgrund Überlappung des Streufächers der ihnen zugeordneten Verteilorgane mit den Fahrspuren der Verteilmaschine in einem der jeweiligen Überlappung entsprechenden Maße verringert werden muss (siehe weiter unten unter Bezugnahme auf die Fig. 18). Die Einstellung eines entsprechend der Breite der Fahrspur(en) reduzierten Massenstromes an Verteilgut, mit welchem die jeweiligen Verteilorgane versorgt werden, ist folglich auf einfache Weise dadurch möglich, dass das dem jeweiligen Verteilorgan über die zugehörige Förderleitung 37 zugeordnete Dosierradsegment 103 mit einer gegenüber den anderen Dosierradsegmenten 103 geringeren Rotationsgeschwindigkeit angetrieben wird.

Um sicherzustellen, dass ein jeweiliges Dosierradsegment 103 der Dosierwalze 101 eines jeden Dosierorgans 100 ausschließlich das ihm zugeordnete Verteilorgan versorgt und nicht etwa von benachbarten Dosierradsegmenten 103 bereits dosierte Massenströme an Verteilgut sich teilweise vermischen bzw. in die Übergabekammer 38, 39 40 einer benachbarten Förderleitung 37 gelangen, erweist es sich im Übrigen von Vorteil, wenn der Dosierwalze 101 eine Mehrzahl an Leitblechen 53 (vgl. die Fig. 5) zugeordnet ist, welche in einem, einem jeweiligen Axialabschnitt der Dosierwalze 101 gemäß einem jeweiligen Dosierradsegment 103 entsprechenden Abstand voneinander angeordnet sind und sich vom Außenumfang der Dosierwalze 101 zwischen jeweils zwei benachbarten Dosierradsegmenten 103 nach unten bis zum oberen Einlass einer jeden Übergabekammer 34, 35, 36 erstrecken. In der Fig. 5 ist auch erkennbar, dass der im Wesentlichen rohrförmige Hohlkörper 105 vorzugsweise an zumindest einem seiner Enden das Dosiergehäuse 102 nach außen durchsetzt, um die in seinem Innern untergebrachten Antriebe 104 elektrisch zu kontaktieren, indem die Versorgungsleitungen gleichfalls im Innern des Hohlkörpers 105 verlegt sind.

Die Fig. 12, in welcher identische und wirkungsgleiche Teile mit denselben Bezugszeichen wie in der Fig. 5 versehen sind und keiner nochmaligen Erörterung bedürfen, zeigt eine Detailansicht der pneumatischen Verteilmaschine gemäß Fig. 1 bis 4 im Bereich einer zweiten Ausführungsvariante ihrer Dosierorgane 200, deren Dosierwalze 201 eine Mehrzahl an gegenüber einem jeweiligen, mit je einer Übergabekammer 38, 39, 40 korrespondierenden Axialabschnitt der Dosierwalze 201 kleineren, gemeinsam rotierbar angetriebenen Dosierradringen 203 aufweist, von welchen in der Fig. 12 nur einige wenige zeichnerisch wiedergegeben sind. Die Dosierradringe 203 sind wiederum beispielsweise nach Art von Nockenradringen ausgestaltet, können aber je nach Art des Verteilgutes selbstverständlich auch nach Art von Zellenradringen oder in beliebiger anderer bekannter Weise ausgebildet sein. Jedes Dosierorgan 200 versorgt entsprechend jenem 100 der Fig. 5 wiederum eine Mehrzahl an - hier fünf - Förderleitungen 37 und umfasst ein Dosiergehäuse 202, welches unterhalb einer jeweiligen Austrittsöffnung 6, 7, 8 des Vorratsbehälters 1 angeordnet ist (siehe oben) und das Verteilgut bis an die Oberfläche der Dosierwalze 201 zu leiten vermag. Die einer jeweiligen Übergabekammer 38, 39, 40 zugeordneten Axialabschnitte der Dosierwalze 201 sind wiederum mittels Leitblechen 53 voneinander getrennt. Zum Antrieb der Dosierwalze 201 dient beispielsweise ein Stirnradgetriebe 49 eines eigenen Motors 48, z.B. in Form eines Elektro- oder Hydromotors, welcher in herkömmlicher Weise mittels einer nicht gezeigten Steuer- und/oder Regeleinrichtung der Verteilmaschine drehzahlsteuer- und/oder -regelbar ist, so dass ein jeweiliges Dosierorgan 200 die ihm zugeordneten Streuleitungen 37 mit unterschiedlichen Verteilgutmengen zu versorgen vermag und somit bei einer Teilbreitenschaltung auf ausgewählten Teilbreiten eine unterschiedliche Menge oder die Menge "Null" ausgebracht werden kann.

Wie insbesondere der Fig. 13 zu entnehmen ist, sitzen die Dosierradringe 203 der Dosierwalze 201 z.B. drehfest auf einer sie tragenden und mittels des Motors 48 (vgl. die Fig. 12) drehangetriebenen Welle 204. Um diejenigen Verteilorgane, deren Verteilungsbreite mit einer der Fahrspuren der Verteilmaschine überlappt, mit einer gegenüber deren Soll-Verteilungsmenge reduzierten Menge an Verteilgut zu versorgen, lässt sich der Massenstrom an Verteilgut, welcher mittels der Dosierwalze 201 des Dosierorgans 200 einer jeweiligen, mit einem solchen Verteilorgan korrespondierenden Übergabekammer 38, 39, 40 zudosiert wird, dadurch reduzieren, indem der entsprechende Axialabschnitt der Dosierwalze 201 mit einem oder mehreren Blindringen 205 versehen wird, wobei die Blindringe 205 keinerlei Dosierfunktion besitzen und beispielsweise eine glatte Umfangsfläche aufweisen. Im vorliegenden Fall ist einer der Dosierradringe 203 durch einen Blindring 205 mit entsprechender axialer Breite ersetzt worden, um den Soll-Massenstrom an Verteilgut, welcher mittels des mit dem Blindring 205 versehenen Axialabschnittes der Dosierwalze 201 dosiert wird, auf ein Maß zu verringern, welches dem Verhältnis von (n-1) zu n multipliziert mit dem Soll-Massenstrom entspricht, wobei "n" die Anzahl an Dosierradringen 203 eines jeweiligen Axialabschnittes der Dosierwalze 201 bezeichnet, welche mit einer jeweiligen Übergabekammer 38, 39, 40 kommunizieren. Die Anzahl an Dosierradringen 203, welche innerhalb eines jeweiligen Axialabschnittes der Dosierwalze 201 durch Blindringe 205 ersetzt werden muss, kann folglich entsprechend der Überlappung des von dem jeweiligen Verteilorgan, welches mit diesem Axialabschnitt der Dosierwalze 201 über die jeweilige Übergabekammer 38, 39, 40 und die jeweilige Förderleitung 37 in Verbindung steht, erzeugten Streufächers mit einer Fahrspur der Verteilmaschine gewählt werden.

In der Fig. 14 ist ein Ausschnitt eines insgesamt mit dem Bezugszeichen 60 versehenen Auslegers - hier: des in Fahrtrichtung betrachtet linken Auslegers 60 - der pneumatischen Verteilmaschine schematisch wiedergegeben, welcher an deren Hubrahmen 9 (vgl. die Fig. 1) schwenkbar befestigt ist. Wie bereits erwähnt, nimmt ein jeder Ausleger 60 eine Mehrzahl der sich an eine jeweilige Übergabekammer 38, 39, 40 anschließenden Förderleitungen 37 des Verteilgutes - üblicherweise die Hälfte aller Förderleitungen 37 - auf, wobei die Förderleitungen 37 in unterschiedlichen Abständen von der Längsachse der Verteilmaschine an Verteilorganen enden, welche im vorliegenden Fall als Prallteller 61 bzw. Prallplatten ausgestaltet sind, um den aus einer jeweiligen Förderleitung 37 austretenden, von einem jeweiligen Axialabschnitt der Dosierwalze 101, 201 der Dosierorgane 100, 200 dosierten Verteilgutstrom in jeweils nebeneinander angeordnete Flächenbereiche auf dem Boden zu verteilen.

Wie insbesondere der abgebrochen dargestellten Detailansicht der Fig. 15 zu entnehmen ist, sind der oder die benachbarten Prallteller 61 derjenigen Verteilorgane, von welchen das Verteilgut teilweise in die Fahrspuren des Nachläufers und/oder des diesen ziehenden Traktors gelangt, deren Verteilungsbreite folglich teilweise mit einer Fahrspur überlappt, ferner mit Begrenzungseinrichtungen 63 versehen, welche zur Begrenzung der Verteilungsbreite des jeweiligen Verteilorgans - also quer zur Fahrtrichtung - ausgebildet sind, um zu verhindern, dass das Verteilgut (auch) entlang dieser Fahrspuren verteilt wird.

In den Fig. 16A und 16B sind schematische Ansichten einer Ausführungsform einer solchen, an einem Prallteller 61 eines Verteilorgans lösbar befestigten oder gemeinsam mit dem Prallteller 61 ausgebildeten Begrenzungseinrichtung 63 schematisch wiedergegeben, welche sich von bekannten Grenzstreueinrichtungen in Form von Leitblechen, wie sie bei pneumatischen Verteilmaschinen zur äußeren Begrenzung der Arbeitsbreite zuweilen Einsatz finden, einerseits dadurch unterscheiden, dass die Begrenzungseinrichtung 63 ein im Wesentlichen U-förmiges, z.B. gleichfalls aus Blech oder Kunststoff gefertigtes Profil aufweist, dessen U-Steg 64 sich in dem an den Prallteller 61 montierten Zustand etwa senkrecht zur Ebene des Pralltellers 61 erstreckt. An den U-Steg 64 der Begrenzungseinrichtung 63 schließt sich jeweils unter einem etwa rechten Winkel einerseits an der oberen Seite ein langer U-Schenkel 64, andererseits an der unteren Seite ein kurzer U-Schenkel 65 an, wobei die U-Schenkel 64, 65 im montierten Zustand in zur Ebene des Pralltellers 61 etwa parallelen Ebenen angeordnet sind. Auf diese Weise wird zuverlässig verhindert, dass die von der Begrenzungseinrichtung 63 abprallenden Verteilgutpartikel bis in die Teilbreiten benachbarter Verteilorgane hinein reflektiert werden.

Andererseits unterscheiden sich die Begrenzungseinrichtungen 63 von herkömmlichen, an dem äußeren Verteilorgan zur Begrenzung der Arbeitsbreite montierbaren Grenzstreueinrichtungen insbesondere dadurch, dass sie verstellbar an dem Prallteller 61 des Verteilorgans montiert bzw. - im Falle einer Ausbildung der Begrenzungseinrichtung 63 gemeinsam mit dem Prallteller 61 des Verteilorgans - in Bezug auf den Prallteller 61 verstellt werden können, um unterschiedlichen Verteilparametern, wie insbesondere der Breite und der Position der durch die Reifen vorgegebenen Fahrspuren, aber beispielsweise auch der Anbauhöhe der Ausleger 60 bzw. dem Abstand der Prallteller 61 der Verteilorgane vom Boden, des Verteilguttyps einschließlich dessen Flugeigenschaften, dem seitlichen Abstand der Prallteller 61 der Verteilorgane voneinander etc., Rechnung tragen zu können. Die Verstellbarkeit der Begrenzungseinrichtungen 63 ist beim vorliegenden Ausführungsbeispiel dadurch gegeben, dass sie um eine sich etwa senkrecht zu den beiden U-Schenkeln 64, 65 bzw. senkrecht zur Ebene des Pralltellers 61 erstreckende Achse A in Bezug auf den Prallteller 61 - hier manuell - schwenkbar sind, was beispielsweise mittels einer korrespondierende Bohrungen einerseits des Pralltellers 61 des Verteilorgans, andererseits der Begrenzungseinrichtung 63 durchsetzenden Schraube 66 oder dergleichen geschehen kann. Zur Anzeige des jeweils eingestellten Verstellwinkels kann eine Skala 67 dienen, welche bei dem gezeigten Ausführungsbeispiel an einem fest mit dem Prallteller 61 des Verteilorgans verbundenen Tragabschnitt 68 des langen U-Schenkels 64 der Begrenzungseinrichtung 63 angeordnet und abschnittsweise durch eine Durchgangsöffnung des den Tragabschnitt 68 übergreifenden und hieran um die Achse A schwenkbar angelenkten endständigen Abschnitt des langen U-Schenkels 64 sichtbar wird.

Darüber hinaus kann gemäß einer Weiterbildung der Begrenzungseinrichtung 63 vorgesehen sein, dass sie nicht nur manuell, sondern motorisch und insbesondere fernbedient einstellbar ist, wie beispielsweise mittels eines gesteuert angetriebenen Motors, Aktuators oder dergleichen (nicht zeichnerisch dargestellt). Dabei kann beispielsweise die Steuer- und/oder Regeleinrichtung der Verteilmaschine zur Eingabe eines gewünschten Einstellwinkels der Begrenzungseinrichtung 63 und/oder zur Eingabe der vorgenannten Parameter ausgebildet sein, wobei die Steuer- und/oder Regeleinrichtung im letztgenannten Fall den geeigneten Einstellwinkel der Begrenzungseinrichtung 63 in Abhängigkeit der eingegebenen Parameter zu errechnen vermag.

Während in der Fig. 17 die Situation des Normalstreuens gezeigt ist, bei welchem die Prallteller 61 aller Verteilorgane mittels eines jeweiligen Axialabschnittes der Dosierwalzen 101, 201 der Dosierorgane 100, 200 mit dem jeweils gewünschten Massenstrom an Verteilgut versorgt werden und die von den Pralltellern 61 jeweils reflektierten Streufächer bzw. -kegel, welche senkrecht zur Fahrtrichtung der Verteilmaschine jeweils die Verteilungsbreite V besitzen, einander jeweils um etwa die Hälfte überlappen (die Verteilungsbreite V entspricht im vorliegenden Fall folglich etwa dem Doppelten der durch den seitlichen Abstand der Prallteller 61 der Verteilorgane voneinander vorgegebenen Teilbreiten der gesamten Arbeitsbreite der Verteilmaschine), um für eine gleichmäßige Querverteilung zu sorgen, ist in der Fig. 18 die Situation dargestellt, wie sie sich ergibt, wenn entlang der Fahrgassen der pneumatischen Verteilmaschine zumindest die Fahrspuren F, welche z.B. etwa der Breite B ihrer Räder bzw. Reifen entspricht, in der vorbeschriebenen Weise ausgespart werden, indem die einer jeweiligen Fahrspur F benachbarten Prallteller 61 der Verteilorgane einerseits mit einer entsprechend justierten Begrenzungseinrichtung 63 (vgl. insbesondere die Fig. 16A und 16B) versehen und andererseits mittels dem jeweiligen, ihnen zugeordneten Axialabschnitt der Dosierwalze 101, 201 des jeweiligen Dosierorgans 100, 200 mit einem entsprechend geringeren Massenstrom an Verteilgut versorgt werden. Die Streufächer bzw. -kegel mit der Verteilungsbreite V, welche von den jeweiligen, mit den Begrenzungseinrichtungen 63 bestückten Pralltellern 61 der Verteilorgane auf dem Boden abgelegt werden, erstrecken sich auf diese Weise nicht mehr in die Fahrspuren F hinein, wobei aufgrund des verminderten Massenstromes an Verteilgut, mit welchem die mit den Begrenzungseinrichtungen 63 bestückten Prallteller 61 der Verteilorgane über die Förderleitungen 37 versorgt werden, auch keine Überversorgung des Bodens mit Verteilgut beidseits der Fahrspuren F auftritt. Folglich ergibt sich eine nicht unerhebliche Einsparung an Verteilgut, welche in der Größenordnung von bis zu etwa 5% betragen kann.

## Patentansprüche

1. Verfahren zum Ausbringen von Verteilgut mittels einer pneumatischen Verteilmaschine, umfassend
- wenigstens ein Dosierorgan (100, 200) mit einer in einem Dosiergehäuse (102, 202) gelagerten, rotierbar angetriebenen Dosierwalze (101, 201) zur Dosierung des Verteilgutes, und
- eine Mehrzahl an einem jeweiligen Axialabschnitt der Dosierwalze (101, 201) des Dosierorgans (100, 200) nachgeordneten Übergabekammern (38, 39, 40), welche einerseits mit wenigstens einem Gebläse (28, 29) in Verbindung stehen und welche andererseits in je eine Förderleitung (37) münden, um das von einem jeweiligen Axialabschnitt der Dosierwalze (101, 201) des Dosierorgans (100, 200) dosierte Verteilgut pneumatisch an je ein Verteilorgan zu überführen, welche nach Art von Pralltellern oder Prallplatten ausgebildet und mit seitlichem Abstand von der Längsachse der Verteilmaschine angeordnet sind,
wobei die Verteilmaschine entlang von Fahrgassen über den Boden bewegt und das mittels des wenigstens einen Dosierorgans dosierte Verteilgut mittels der Verteilorgane auf dem Boden verteilt wird, **dadurch gekennzeichnet, dass** auf die Fahrgassen zumindest im Bereich der Fahrspuren (F) der Verteilmaschine und/oder im Bereich der Fahrspuren (F) einer sie tragenden Zugmaschine eine gegenüber der Soll-Verteilungsmenge reduzierte Verteilungsmenge an Verteilgut oder im Wesentlichen kein Verteilgut ausgebracht wird, wobei einem jeweiligen Verteilorgan, in dessen Verteilungsbreite (V) sich eine Fahrspur (F) oder ein Abschnitt einer Fahrspur (F) befindet, eine Begrenzungseinrichtung (63) zugeordnet wird, welche zur Verschmälerung der Verteilungsbreite (V) des jeweiligen Verteilorgans um die Breite der Fahrspur (F) oder deren Abschnittes ausgebildet ist.

2. Verfahren nach Anspruch 1, **dadurch gekennzeichnet, dass** die Begrenzungseinrichtungen (63) hinsichtlich ihrer Anordnung relativ zu einem jeweiligen Verteilorgan in Abhängigkeit wenigstens eines Parameters aus der Gruppe
- Breite der durch die Reifenbreite vorgegebenen Fahrspuren (F);
- seitlicher Abstand der Fahrspuren (F) in Bezug auf die Verteilorgane;
- Abstand der Verteilorgane vom Boden;
- Abstand der Verteilorgane voneinander;
- Geometrie der Begrenzungseinrichtungen (63);
- physikalische Eigenschaften des Verteilgutes oder einer Gruppe von Verteilgütern; und
- Massenstrom an Verteilgut
eingestellt werden, wobei die Begrenzungseinrichtungen (63) insbesondere manuell und/oder automatisch eingestellt werden.

3. Verfahren nach Anspruch 2, **dadurch gekennzeichnet, dass** die Begrenzungseinrichtungen (63) dadurch eingestellt werden, dass sie um wenigstens eine, insbesondere um genau eine, Schwenkachse (A) verschwenkt werden.

4. Verfahren nach Anspruch 2 oder 3, **dadurch gekennzeichnet, dass** die Begrenzungseinrichtungen (63) automatisch mittels einer Verstelleinrichtung eingestellt werden, welche ein, insbesondere fernbedienbares, motorisches und/oder aktuatorisches Stellglied umfasst.

5. Verfahren nach einem der Ansprüche 2 bis 4, **dadurch gekennzeichnet, dass** eine Verstelleinrichtung zur automatischen Einstellung der Begrenzungseinrichtungen (63) mit einer Steuer- und/oder Regeleinrichtung der Verteilmaschine wirkverbunden wird, welche die Begrenzungseinrichtungen (63) in Abhängigkeit wenigstens eines Parameters aus der Gruppe
- Breite der durch die Reifenbreite vorgegebenen Fahrspuren (F);
- seitlicher Abstand der Fahrspuren (F) in Bezug auf die Verteilorgane;
- Abstand der Verteilorgane vom Boden;
- Abstand der Verteilorgane voneinander;
- Geometrie der Begrenzungseinrichtungen (63);
- physikalische Eigenschaften des Verteilgutes oder einer Gruppe von Verteilgütern; und
- Massenstrom an Verteilgut
einstellt, wobei zumindest einer der Parameter
- in einer der Steuer- und/oder Regeleinrichtung zugeordneten Speichereinrichtung hinterlegt und/oder
- in eine der Steuer- und/oder Regeleinrichtung zugeordnete Eingabeeinrichtung eingegeben und/oder
- sensorisch ermittelt
wird.

6. Verfahren nach einem der Ansprüche 1 bis 5, **dadurch gekennzeichnet, dass** ein jeweiliges Verteilorgan, in dessen Verteilungsbreite (V) sich eine Fahrspur (F) oder ein Abschnitt einer Fahrspur (F) befindet, mittels eines jeweiligen Axialabschnittes der Dosierwalze (101, 201) des Dosierorgans (100, 200), welchem die Übergabekammer (38, 39, 40) zugeordnet ist, deren Verteilerleitung (37) dieses Verteilorgan mit dosiertem Verteilgut versorgt, mit einem gegenüber dem Soll-Massenstrom an Verteilgut verminderten Massenstrom an Verteilgut versorgt wird.

7. Verfahren nach Anspruch 6, **dadurch gekennzeichnet, dass** der Massenstrom an Verteilgut, mit welchem ein jeweiliges Verteilorgan, in dessen Verteilungsbreite (V) sich eine Fahrspur (F) oder ein Abschnitt einer Fahrspur (F) befindet, mit Verteilgut versorgt wird, entsprechend der Breite der Fahrspur (F) oder deren Abschnittes, welche mit seiner Verteilungsbreite (V) überlappt, vermindert wird, wobei insbesondere die Querverteilung an Verteilgut über die Verteilungsbreite (V) dieses Verteilorgans berücksichtigt wird.

8. Verfahren nach Anspruch 6 oder 7, **dadurch gekennzeichnet, dass** zur Verminderung des Massenstromes an Verteilgut eines jeweiligen Verteilorgans, in dessen Verteilungsbreite (V) sich eine Fahrspur (F) oder ein Abschnitt einer Fahrspur (F) befindet,
(a) der dem Verteilorgan zugeordnete Axialabschnitt der Dosierwalze (201) des Dosierorgans (200) mit wenigstens einem Blindring versehen wird, dessen axiale Breite entsprechend dem Anteil an Verteilgut gewählt wird, um welchen der Massenstrom an Verteilgut verringert werden soll, wobei insbesondere
- eine Dosierwalze (201) mit einer Mehrzahl an gegenüber dem Axialabschnitt der Dosierwalze (201) schmaleren, gemeinsam rotierbar angetriebenen Dosierradringen verwendet wird, von welchen zumindest einer gegen wenigstens einen Blindring ausgetauscht wird, oder
- wenigstens ein Blindring derart auf einen Teilabschnitt des Axialabschnittes der Dosierwalze (201) aufgebracht wird, dass er diesen Teilabschnitt überdeckt; oder
(b) ein Dosierorgan (100) mit einer Dosierwalze (101) verwendet wird, deren Axialabschnitte von unabhängig voneinander rotierbar angetriebenen Dosierradsegmenten (103) gebildet sind, wobei das jeweilige, dem jeweiligen Verteilorgan zugeordnete Dosierradsegment (103) der Dosierwalze (101) mit einer gegenüber der zur Dosierung des Soll-Massenstromes an Verteilgut vorgesehenen Soll-Drehzahl verminderten Drehzahl angetrieben wird, welche entsprechend dem Anteil an Verteilgut gewählt wird, um welchen der Massenstrom an Verteilgut verringert werden soll, wobei insbesondere ein jeweiliger Antrieb (104) eines jeweiligen Dosierradsegmentes (103) der Dosierwalze (101) mit einer Steuer- und/oder Regeleinrichtung der Verteilmaschine wirkverbunden wird, mittels welcher ein jeweiliges, einem jeweiligen Verteilorgan, in dessen Verteilungsbreite (V) sich eine Fahrspur (F) oder ein Abschnitt einer Fahrspur (F) befindet, zugeordnetes Dosierradsegment (103) der Dosierwalze (101) mit einer jeweiligen, gegenüber der zur Dosierung des Soll-Massenstromes an Verteilgut vorgesehenen Soll-Drehzahl verminderten Drehzahl angetrieben wird.

9. Pneumatische Verteilmaschine zum Ausbringen von Verteilgut, umfassend
- wenigstens ein Dosierorgan (100, 200) mit einer in einem Dosiergehäuse (102, 202) gelagerten, rotierbar angetriebenen Dosierwalze (101, 201) zur Dosierung des Verteilgutes, und
- eine Mehrzahl an einem jeweiligen Axialabschnitt der Dosierwalze (101, 201) des Dosierorgans (100, 200) nachgeordneten Übergabekammern (38, 39, 40), welche einerseits mit wenigstens einem Gebläse (28, 29) in Verbindung stehen und welche andererseits in je eine Förderleitung (37) münden, um das von einem jeweiligen Axialabschnitt der Dosierwalze (101, 201) des Dosierorgans (100, 200) dosierte Verteilgut pneumatisch an je ein Verteilorgan zu überführen, welche nach Art von Pralltellern oder Prallplatten ausgebildet und mit seitlichem Abstand von der Längsachse der Verteilmaschine angeordnet sind, um das mittels des wenigstens einen Dosierorgans (100, 200) dosierte Verteilgut mittels der Verteilorgane auf dem Boden zu verteilen,
wobei die Verteilmaschine zum Ausbringen einer gegenüber der Soll-Verteilungsmenge reduzierten Verteilungsmenge an Verteilgut oder im Wesentlichen keines Verteilgutes auf den Fahrgassen zumindest im Bereich der Fahrspuren (F) der Verteilmaschine und/oder im Bereich der Fahrspuren (F) einer sie tragenden Zugmaschine ausgebildet ist, **dadurch gekennzeichnet, dass** ein jeweiliges Verteilorgan, in dessen Verteilungsbreite (V) sich eine Fahrspur (F) oder ein Abschnitt einer Fahrspur (F) befindet, mit einer Begrenzungseinrichtung (63) versehen ist, welche zur Verschmälerung der Verteilungsbreite (V) des jeweiligen Verteilorgans um die Fahrspur (F) oder um deren Abschnitt ausgebildet ist.

10. Verteilmaschine nach Anspruch 9, **dadurch gekennzeichnet, dass** die Begrenzungseinrichtungen (63) verstellbar an den Verteilorganen oder an diesen zugeordneten Trägern angeordnet sind, wobei sie insbesondere um wenigstens eine, vorzugsweise um genau eine, Schwenkachse (A) verschwenkbar sind.

11. Verteilmaschine nach Anspruch 10, **dadurch gekennzeichnet, dass** die Begrenzungseinrichtungen (63)
- manuell verstellbar sind; und/oder
- mittels einer Verstelleinrichtung automatisch verstellbar sind, wobei die Verstelleinrichtung ein, insbesondere fernbedienbares, motorisches und/oder aktuatorisches Stellglied umfasst.

12. Verteilmaschine nach Anspruch 10 oder 11, **dadurch gekennzeichnet, dass** eine Verstelleinrichtung zur automatischen Verstellung der Begrenzungseinrichtungen (63) mit einer Steuer- und/oder Regeleinrichtung der Verteilmaschine in Verbindung steht, um die Begrenzungseinrichtungen (63) automatisch in Abhängigkeit wenigstens eines Parameters aus der Gruppe
- Breite der durch die Reifenbreite vorgegebenen Fahrspuren (F);
- seitlicher Abstand der Fahrspuren (F) in Bezug auf die Verteilorgane;
- Abstand der Verteilorgane vom Boden;
- Abstand der Verteilorgane voneinander;
- Geometrie der Begrenzungseinrichtungen (63);
- physikalische Eigenschaften des Verteilgutes oder einer Gruppe von Verteilgütern; und
- Massenstrom an Verteilgut
zu verstellen, wobei zumindest einer der Parameter
- in einer der Steuer- und/oder Regeleinrichtung zugeordneten Speichereinrichtung hinterlegt; und/oder
- in eine der Steuer- und/oder Regeleinrichtung zugeordnete Eingabeeinrichtung eingebbar; und/oder
- sensorisch ermittelbar
ist.

13. Verteilmaschine nach einem der Ansprüche 9 bis 12, **dadurch gekennzeichnet, dass** die Begrenzungseinrichtungen (63) nach Art von Leitblechen ausgebildet sind, welche insbesondere ein im Wesentlichen U-förmiges Profil aufweisen, an deren U-Steg (64) sich einerseits an seinem einen Ende ein langer U-Schenkel (64), andererseits an seinem anderen Ende ein kurzer U-Schenkel (65) anschließt.

14. Verteilmaschine nach einem der Ansprüche 9 bis 13, **dadurch gekennzeichnet, dass** zur Verminderung des Massenstromes an Verteilgut eines jeweiligen Verteilorgans, in dessen Verteilungsbreite (V) sich eine Fahrspur (F) oder ein Abschnitt einer Fahrspur (F) befindet,
(a) der dem Verteilorgan zugeordnete Axialabschnitt der Dosierwalze (201) des Dosierorgans (200) mit wenigstens einem Blindring versehen ist, dessen axiale Breite entsprechend dem Anteil an Verteilgut gewählt ist, um welchen der Massenstrom an Verteilgut verringert werden soll, wobei insbesondere
- die Dosierwalze (201) eine Mehrzahl an gegenüber dem Axialabschnitt der Dosierwalze (201) kleineren, gemeinsam rotierbar angetriebenen Dosierradringen aufweist, von welchen zumindest einer von wenigstens einem Blindring gebildet ist, oder
- wenigstens ein Blindring derart auf einen Teilabschnitt des Axialabschnittes der Dosierwalze (201) aufgebracht ist, dass er diesem Teilabschnitt überdeckt; oder
(b) die Axialabschnitte der Dosierwalze (101) des Dosierorgans (100) von unabhängig voneinander rotierbar angetriebenen Dosierradsegmenten (103) gebildet sind, so dass das jeweilige, dem jeweiligen Verteilorgan zugeordnete Dosierradsegment (103) der Dosierwalze (101) mit einer gegenüber der zur Dosierung des Soll-Massenstromes an Verteilgut vorgesehenen Soll-Drehzahl verminderten Drehzahl antreibbar ist, wobei insbesondere ein jeweiliger Antrieb (104) eines jeweiligen Dosierradsegmentes (103) der Dosierwalze (101) mit einer Steuer- und/oder Regeleinrichtung der Verteilmaschine in Verbindung steht, um ein jeweiliges, einem jeweiligen Verteilorgan, in dessen Verteilungsbreite (V) sich eine Fahrspur (F) oder ein Abschnitt einer Fahrspur (F) befindet, zugeordnetes Dosierradsegment (103) der Dosierwalze (101) mit einer jeweiligen, gegenüber der zur Dosierung des Soll-Massenstromes an Verteilgut vorgesehenen Soll-Drehzahl verminderten Drehzahl anzutreiben.

## Claims

1. Method for delivery of distributed goods by means of a pneumatic distributor, comprising
- at least one metering device (100, 200) with a metering roller (101, 201) mounted in a metering housing (102, 202) and driven rotatably for metering the distributed goods, and
- a multiplicity of transfer chambers (38, 39, 40) which are arranged downstream on a respective axial portion of the metering roller (101, 201) of the metering device (100, 200), are connected on one hand to at least one fan (28, 29) and discharge on the other hand into in each case a conveying line (37) in order to transfer the distributed goods metered from a respective axial portion of the metering roller (101, 201) of the metering device (100, 200) pneumatically to in each case one distributing device which are formed in the manner of baffle plates and arranged with a lateral distance from the longitudinal axis of the distributor,
wherein the distributor moves along tracks over the ground and the distributed goods metered by means of the at least one metering device are distributed on the ground by means of the distributing devices, **characterized in that** a reduced distribution quantity of distributed goods in comparison with the setpoint distribution quantity or substantially no distributed goods are delivered to the tracks at least in the region of the lanes (F) of the distributor and/or in the region of the lanes (F) of a tractor bearing it, wherein a restriction apparatus (63) is assigned to a respective distributing device, in the distribution width (V) of which a lane (F) or a portion of a lane (F) is located, which restriction apparatus (63) is formed to narrow the distribution width (V) of the respective distributing device by the width of the lane (F) or the portion thereof.

2. Method according to Claim 1, **characterized in that** the restriction apparatuses (63) are adjusted in terms of their arrangement relative to a respective distributing device as a function of at least one parameter from the group
- width of the lanes (F) defined by the tyre width;
- lateral spacing of the lanes (F) in relation to the distributing devices;
- spacing of the distributing devices from the ground;
- spacing of the distributing devices from one another;
- geometry of the restriction apparatuses (63);
- physical properties of the distributed goods or a group of distributed goods; and
- mass flow of distributed goods,
wherein the restriction apparatuses (63) are adjusted in particular manually and/or automatically.

3. Method according to Claim 2, **characterized in that** the restriction apparatuses (63) are adjusted **in that** they are pivoted about at least one, in particular about precisely one pivot axis (A).

4. Method according to Claim 2 or 3, **characterized in that** the restriction apparatuses (63) are adjusted automatically by means of an adjustment apparatus, which adjustment apparatus comprises an actuator which is in particular remote-controlled, motor-controlled and/or actuator-controlled.

5. Method according to any one of Claims 2 to 4, **characterized in that** an adjustment apparatus for automatic adjustment of the restriction apparatuses (63) is operatively connected to an open-loop and/or closed-loop control apparatus of the distributor which adjusts the restriction apparatuses (63) as a function of at least one parameter from the group
- width of the lanes (F) defined by the tyre width;
- lateral spacing of the lanes (F) in relation to the distributing devices;
- spacing of the distributing devices from the ground;
- spacing of the distributing devices from one another;
- geometry of the restriction apparatuses (63);
- physical properties of the distributed goods or a group of distributed goods; and
- mass flow of distributed goods,
wherein at least one of the parameters
- is stored in a storage apparatus assigned to the open-loop and/or closed-loop control apparatus and/or
- is input into an input apparatus assigned to the open-loop and/or closed-loop control apparatus and/or
- is determined by sensors.

6. Method according to any one of Claims 1 to 5, **characterized in that** a respective distributing device, in the distribution width (V) of which a lane (F) or a portion of a lane (F) is located, by means of a respective axial portion of the metering roller (101, 201) of the metering device (100, 200), to which the transfer chamber (38, 39, 40) is assigned, the distributor line (37) of which supplies this distributing device with metered distributed goods, is supplied with a mass flow of distributed goods which is reduced in comparison with the setpoint mass flow of distributed goods.

7. Method according to Claim 6, **characterized in that** the mass flow of distributed goods, with which a respective distributing device, in the distribution width (V) of which a lane (F) or a portion of a lane (F) is located, is supplied with distributed goods, is reduced in accordance with the width of the lane (F) or its portion which overlaps with its distribution width (V), wherein in particular the transverse distribution of distributed goods over the distribution width (V) of this distributing device is taken into account.

8. Method according to Claim 6 or 7, **characterized in that**, in order to reduce the mass flow of distributed goods of a respective distributing device in the distribution width (V) of which a lane (F) or a portion of a lane (F) is located,
(a) the axial portion of the metering roller (201) of the metering device (200) assigned to the distributing device is provided with at least one blind ring, the axial width of which is selected in accordance with the ratio of distributed goods by which the mass flow of distributed goods should be reduced, wherein in particular
- a metering roller (201) with a multiplicity of metering wheel rings which are narrower in comparison with the axial portion of the metering roller (201) and are driven jointly rotatably, of which at least one is replaced with at least one blind ring, or
- at least one blind ring is fitted on a sub-portion of the axial portion of the metering roller (201) such that it covers this sub-portion; or
(b) a metering device (100) with a metering roller (101) is used, the axial portions of which are formed by metering wheel segments (103) which are driven rotatably independently of one another, wherein the respective metering wheel segment (103) of the metering roller (101) assigned to the respective distributing device is driven with a rotational speed which is reduced in comparison with the setpoint rotational speed provided for metering the setpoint mass flow of distributed goods, which reduced rotational speed is selected in accordance with the ratio of distributed goods by which the mass flow of distributed goods should be reduced, wherein in particular a respective drive (104) of a respective metering wheel segment (103) of the metering roller (101) is operatively connected to an open-loop and/or closed-loop control apparatus of the distributor, by means of which a respective metering wheel segment (103) of the metering roller (101) assigned to a respective distributing device, in the distribution width (V) of which a lane (F) or a portion of a lane (F) is located, is driven with a respective rotational speed which is reduced in comparison with the setpoint rotational speed provided for metering the setpoint mass flow of distributed goods.

9. Pneumatic distributor for delivery of distributed goods, comprising
- at least one metering device (100, 200) with a metering roller (101, 201) mounted in a metering housing (102, 202) and driven rotatably for metering the distributed goods, and
- a multiplicity of transfer chambers (38, 39, 40) arranged downstream on a respective axial portion of the metering roller (101, 201) of the metering device (100, 200), which transfer chambers (38, 39, 40) are on one hand connected to at least one fan (28, 29) and which on the other hand discharge into in each case one conveying line (37) in order to transfer the distributed goods metered from a respective axial portion of the metering roller (101, 201) of the metering device (100, 200) pneumatically to in each case a distributing device which are formed in the manner of baffle plates and are arranged with a lateral spacing from the longitudinal axis of the distributor in order to distribute the distributed goods metered by means of the least one metering device (100, 200) by means of the distributing devices on the ground,
wherein the distributor for delivery of a reduced distribution quantity of distributed goods in comparison with the setpoint distribution quantity or substantially no distributed goods is formed on the tracks at least in the region of the lanes (F) of the distributor and/or in the region of the lanes (F) of a tractor bearing them, **characterized in that** a respective distributing device, in the distribution width (V) of which a lane (F) or a portion of a lane (F) is located, is provided with a restriction apparatus (63) which is formed to narrow the distribution width (V) of the respective distributing device by the lane (F) or by the portion thereof.

10. Distributor according to Claim 9, **characterized in that** the restriction apparatuses (63) are arranged adjustably on the distributing devices or on carriers assigned to these, wherein they are pivotable in particular about at least one, preferably about precisely one pivot axis (A).

11. Distributor according to Claim 10, **characterized in that** the restriction apparatuses (63)
- are manually adjustable; and/or
- are automatically adjustable by means of an adjustment apparatus, wherein the adjustment apparatus comprises an actuator which is in particular remote-controlled, motor-controlled and/or actuator-controlled.

12. Distributor according to Claim 10 or 11, **characterized in that** an adjustment apparatus for automatic adjustment of the restriction apparatuses (63) is connected to an open-loop and/or closed-loop control apparatus of the distributor in order to adjust the restriction apparatuses (63) automatically as a function of at least one parameter from the group
- width of the lanes (F) defined by the tyre width;
- lateral spacing of the lanes (F) in relation to the distributing devices;
- spacing of the distributing devices from the ground;
- spacing of the distributing devices from one another;
- geometry of the restriction apparatuses (63);
- physical properties of the distributed goods or a group of distributed goods; and
- mass flow of distributed goods,
wherein at least one of the parameters
- is stored in a storage apparatus assigned to the open-loop and/or closed-loop control apparatus; and/or
- is input into an input apparatus assigned to the open-loop and/or closed-loop control apparatus; and/or
- is determined by sensors.

13. Distributor according to any one of Claims 9 to 12, **characterized in that** the restriction apparatuses (63) are formed in the manner of baffles which have in particular a substantially U-shaped profile, the U-web (64) of which is adjoined on one hand at one end by a long U-limb (64), on the other hand at its other end by a short U-limb (65).

14. Distributor according to any one of Claims 9 to 13, **characterized in that**, in order to reduce the mass flow of distributed goods of a respective distributing device in the distribution width (V) of which a lane (F) or a portion of a lane (F) is located,
(a) the axial portion of the metering roller (201) of the metering device (200) assigned to the distributing device is provided with at least one blind ring, the axial width of which is selected in accordance with the ratio of distributed goods by which the mass flow of distributed goods should be reduced, wherein in particular
- the metering roller (201) has a multiplicity of metering wheel rings which are smaller in comparison with the axial portion of the metering roller (201) and are driven jointly rotatably, of which at least one is formed by at least one blind ring, or
- at least one blind ring is fitted on a sub-portion of the axial portion of the metering roller (201) such that it covers this sub-portion; or
(b) the axial portions of the metering roller (101) of the metering device (100) are formed by metering wheel segments (103) which are driven rotatably independently of one another so that the respective metering wheel segment (103) of the metering roller (101) assigned to the respective distributing device can be driven with a rotational speed which is reduced in comparison with the setpoint rotational speed provided for metering the setpoint mass flow of distributed goods, wherein in particular a respective drive (104) of a respective metering wheel segment (103) of the metering roller (101) is connected to an open-loop and/or closed-loop control apparatus of the distributor in order to drive a respective metering wheel segment (103) of the metering roller (101) assigned to a respective distributing device, in the distribution width (V) of which a lane (F) or a portion of a lane (F) is located, with a respective rotational speed which is reduced in comparison with the setpoint rotational speed provided for metering the setpoint mass flow of distributed goods.

## Revendications

1. Procédé de distribution de produit à épandre au moyen d'une machine d'épandage pneumatique, comprenant :
- au moins un organe de dosage (100, 200) avec un rouleau de dosage (101, 201) pouvant être entraîné en rotation et logé dans un carter de dosage (102, 202), pour le dosage du produit à épandre ; et
- une pluralité de compartiments de transfert (38, 39, 40) placés en aval au niveau d'une section axiale respective du rouleau de dosage (101, 201) de l'organe de dosage (100, 200) et reliés d'une part à au moins une soufflerie (28, 29) et débouchant d'autre part dans respectivement une conduite de transport (37) pour transférer de façon pneumatique le produit à épandre dosé par une section axiale respective du rouleau de dosage (101, 201) de l'organe de dosage (100, 200) à respectivement un organe d'épandage réalisé à la façon de plateaux de percussion ou de plaques de percussion et disposés à une certaine distance latérale de l'axe longitudinal de la machine d'épandage ;
la machine d'épandage se déplaçant au-dessus du sol le long de voies de passage sur le terrain et le produit à épandre dosé à l'aide de l'au moins un organe de dosage étant épandu sur le sol à l'aide des organes d'épandage, **caractérisé en ce qu'**une quantité d'épandage de produit à épandre réduite par rapport à la quantité théorique d'épandage ou pour l'essentiel aucun produit à épandre n'est amené sur les voies de passage sur le terrain au moins dans la région des ornières (F) de la machine d'épandage et/ou dans la région des ornières (F) d'un tracteur la tractant, un dispositif de délimitation (63) étant associé à un organe d'épandage respectif dans la largeur d'épandage (V) duquel se trouve une ornière (F) ou une section d'une ornière (F), ledit dispositif de délimitation étant réalisé pour rétrécir la largeur d'épandage (V) de l'organe d'épandage respectif de la largeur de a (F) ou de sa section.

2. Procédé selon la revendication 1, **caractérisé en ce que** les dispositifs de délimitation (63) sont réglés par rapport à leur agencement relatif à un organe d'épandage respectif, en fonction d'au moins un paramètre appartenant au groupe :
- largeur des ornières (F) prédéfinies par la largeur des pneumatiques ;
- écartement latéral des ornières (F) par rapport aux organes d'épandage ;
- écartement entre les organes d'épandage et le sol ;
- écartement entre les organes d'épandage ;
- forme géométrique des dispositifs de délimitation (63) ;
- propriétés physiques du produit à épandre ou d'un groupe de produits à épandre ; et
- débit massique du produit à épandre ;
les dispositifs de délimitation (63) étant réglés notamment manuellement et/ou automatiquement.

3. Procédé selon la revendication 2, **caractérisé en ce que** les dispositifs de délimitation (63) sont réglés par pivotement autour d'au moins un axe de pivotement (A), notamment autour de précisément un axe.

4. Procédé selon la revendication 2 ou 3, **caractérisé en ce que** les dispositifs de délimitation (63) sont réglés automatiquement à l'aide d'un dispositif de réglage comprenant un élément de réglage motorisé et/ou doté d'actionneurs, notamment télécommandable.

5. Procédé selon l'une quelconque des revendications 2 à 4, **caractérisé en ce qu'**un dispositif de réglage est relié activement à un dispositif de commande et/ou de réglage de la machine d'épandage pour le réglage automatique des dispositifs de délimitation (63), ladite machine réglant les dispositifs de délimitation (63) en fonction d'au moins un paramètre appartenant au groupe :
- largeur des ornières (F) prédéfinies par la largeur des pneumatiques ;
- écartement latéral des ornières (F) par rapport aux organes d'épandage ;
- écartement entre les organes d'épandage et le sol ;
- écartement entre les organes d'épandage ;
- forme géométrique des dispositifs de délimitation (63) ;
- propriétés physiques du produit à épandre ou d'un groupe de produits à épandre ; et
- débit massique du produit à épandre ;
au moins un des paramètres étant :
- mémorisé dans un dispositif de mémoire associé au dispositif de commande et/ou de réglage ; et/ou
- saisi dans un dispositif de saisie associé au dispositif de commande et/ou de réglage ; et/ou
- calculé par voie de capteurs.

6. Procédé selon l'une quelconque des revendications 1 à 5, **caractérisé en ce qu'**un organe d'épandage respectif dans la largeur d'épandage (V) duquel se trouve une ornière (F) ou une section d'une ornière (F) est alimenté à un débit massique du produit à épandre amoindri par rapport au débit massique théorique du produit à épandre à l'aide d'une section axiale respective du rouleau de dosage (101, 201) de l'organe de dosage (100, 200) auquel est associé le compartiment de transfert (38, 39, 40) dont la conduite de dosage (37) de l'organe d'épandage est alimentée en produit à épandre dosé.

7. Procédé selon la revendication 6, **caractérisé en ce que** le débit massique du produit à épandre alimentant en produit à épandre un organe d'épandage respectif dans la largeur d'épandage (V) duquel se trouve une ornière (F) ou une section d'une ornière (F) est amoindri en fonction de la largeur de l'ornière (F) ou de sa section se chevauchant avec la largeur d'épandage (V), prenant notamment en compte l'épandage transversal de produit à épandre sur la largeur d'épandage (V) de cet organe d'épandage.

8. Procédé selon la revendication 6 ou 7, **caractérisé en ce qu'**une ornière (F) ou une section d'une ornière (F) se trouve dans la largeur d'épandage (V) d'un organe d'épandage respectif pour la réduction du débit massique du produit à épandre dudit organe d'épandage :
(a) la section axiale du rouleau de dosage (201) de l'organe de dosage (200) associée à l'organe d'épandage est pourvue d'au moins une bague aveugle dont la largeur axiale est sélectionnée en fonction de la réduction de quantité de produit à épandre permettant d'atteindre le bon débit massique du produit à épandre ; notamment
- un rouleau de dosage (201) étant utilisé avec une pluralité de bagues de roue de dosage plus étroites que la section axiale du rouleau de dosage (201) et pouvant être entraînées ensemble en rotation, au moins une bague parmi ladite pluralité de bagues de roue de dosage pouvant être remplacée par au moins une bague aveugle ; ou
- au moins une bague aveugle pouvant être amenée de telle sorte sur une section partielle de la section axiale du rouleau de dosage (201) qu'elle recouvre cette section partielle ; ou
(b) un organe de dosage (100) avec un rouleau de dosage (101) étant utilisé dont les sections axiales sont formées de segments de roue de dosage (103) pouvant être entraînés en rotation indépendamment les uns des autres, le segment de roue de dosage (103) respectif, associé à l'organe d'épandage respectif, du rouleau de dosage (101) étant entraîné à une vitesse de rotation moindre par rapport à la vitesse de rotation théorique prévue pour le dosage du débit massique théorique du produit à épandre, cette vitesse étant sélectionnée en fonction de la quantité de réduction de produit à épandre à atteindre dans le débit massique du produit à épandre, un entraînement (104) respectif d'un segment de roue de dosage (103) respectif du rouleau de dosage (101) étant notamment relié activement à un dispositif de commande et/ou de réglage de la machine d'épandage à l'aide duquel un segment de roue de dosage (103) du rouleau de dosage (101) est entraîné à une vitesse de rotation respective moindre par rapport à la vitesse de rotation théorique prévue pour le dosage du débit massique théorique du produit à épandre.

9. Machine d'épandage pneumatique pour la distribution de produit à épandre, comprenant :
- au moins un organe de dosage (100, 200) avec un rouleau de dosage (101, 201) pouvant être entraîné en rotation et logé dans un carter de dosage (102, 202), pour le dosage du produit à épandre ; et
- une pluralité de compartiments de transfert (38, 39, 40) placés en aval au niveau d'une section axiale respective du rouleau de dosage (101, 201) de l'organe de dosage (100, 200) et reliés d'une part à au moins une soufflerie (28, 29) et débouchant d'autre part dans respectivement une conduite de transport (37) pour transférer de façon pneumatique le produit à épandre dosé par une section axiale respective du rouleau de dosage (101, 201) de l'organe de dosage (100, 200) à respectivement un organe d'épandage réalisé à la façon de plateaux de percussion ou de plaques de percussion et disposés à une certaine distance latérale de l'axe longitudinal de la machine d'épandage, pour épandre sur le sol le produit à épandre dosé à l'aide de l'au moins un organe de dosage (100, 200), à l'aide des organes d'épandage ;
la machine d'épandage étant formée pour distribuer une quantité d'épandage de produit à épandre réduite par rapport à la quantité théorique d'épandage ou pour l'essentiel aucun produit à épandre sur les voies de passage sur le terrain au moins dans la région des ornières (F) de la machine d'épandage et/ou dans la région des ornières (F) d'un tracteur la tractant, **caractérisée en ce qu'**un organe d'épandage respectif dans la largeur d'épandage (V) duquel se trouve une ornière (F) ou une section d'une ornière (F) est pourvu d'un dispositif de délimitation (63) réalisé pour rétrécir la largeur d'épandage (V) de l'organe d'épandage respectif de la largeur de l'ornière (F) ou de sa section.

10. Machine d'épandage selon la revendication 9, **caractérisée en ce que** les dispositifs de délimitation (63) sont disposés de façon réglable au niveau des organes d'épandage ou au niveau des supports lui étant associés, lesdits dispositifs de délimitation étant réglés par pivotement autour d'au moins un axe de pivotement (A), notamment autour de précisément un axe.

11. Machine d'épandage selon la revendication 10, **caractérisée en ce que** les dispositifs de délimitation (63) :
- sont réglables manuellement ; et/ou
- sont réglables automatiquement au moyen d'un dispositif de réglage, le dispositif de réglage comprenant un élément de réglage motorisé et/ou doté d'actionneurs, notamment télécommandable.

12. Machine d'épandage selon la revendication 10 ou 11, **caractérisée en ce qu'**un dispositif de réglage est relié à un dispositif de commande et/ou de réglage de la machine d'épandage pour le réglage automatique des dispositifs de délimitation (63), pour régler automatiquement les dispositifs de délimitation (63) en fonction d'au moins un paramètre appartenant au groupe :
- largeur des ornières (F) prédéfinies par la largeur des pneumatiques ;
- écartement latéral des ornières (F) par rapport aux organes d'épandage ;
- écartement entre les organes d'épandage et le sol ;
- écartement entre les organes d'épandage ;
- forme géométrique des dispositifs de délimitation (63) ;
- propriétés physiques du produit à épandre ou d'un groupe de produits à épandre ; et
- débit massique du produit à épandre ;
au moins un des paramètres étant :
- mémorisé dans un dispositif de mémoire associé au dispositif de commande et/ou de réglage ; et/ou
- saisi dans un dispositif de saisie associé au dispositif de commande et/ou de réglage ; et/ou
- calculé par voie de capteurs.

13. Machine d'épandage selon l'une quelconque des revendications 9 à 12, **caractérisée en ce que** les dispositifs de délimitation (63) sont réalisés à la façon de tôles conductrices présentant notamment un profilé pour l'essentiel en forme de U au niveau de l'étai en U (64) duquel est raccordé d'une part au niveau de sa première extrémité un long côté du U (64), d'autre part au niveau de son autre extrémité un court côté du U (65).

14. Machine d'épandage selon l'une quelconque des revendications 9 à 13, **caractérisée en ce qu'**une ornière (F) ou une section d'une ornière (F) se trouve dans la largeur d'épandage (V) d'un organe d'épandage respectif pour la réduction du débit massique du produit à épandre dudit organe d'épandage :
(a) la section axiale du rouleau de dosage (201) de l'organe de dosage (200) associée à l'organe d'épandage est pourvue d'au moins une bague aveugle dont la largeur axiale est sélectionnée en fonction de la réduction de quantité de produit à épandre permettant d'atteindre le bon débit massique du produit à épandre ; notamment
- le rouleau de dosage (201) comportant une pluralité de bagues de roue de dosage plus petites que la section axiale du rouleau de dosage (201) et pouvant être entraînées ensemble en rotation, au moins une bague parmi ladite pluralité de bagues de roues pouvant être formée par au moins une bague aveugle ; ou
- au moins une bague aveugle pouvant être amenée de telle sorte sur une section partielle de la section axiale du rouleau de dosage (201) qu'elle recouvre cette section partielle ; ou
(b) les sections axiales du rouleau de dosage (101) de l'organe de dosage (100) étant formées de segments de roue de dosage (103) pouvant être entraînés en rotation indépendamment les uns des autres, le segment de roue de dosage (103) respectif, associé à l'organe d'épandage respectif, du rouleau de dosage (101) pouvant être entraîné à une vitesse de rotation moindre par rapport à la vitesse de rotation théorique prévue pour le dosage du débit massique théorique du produit à épandre, un entraînement (104) respectif d'un segment de roue de dosage (103) respectif du rouleau de dosage (101) étant notamment relié à un dispositif de commande et/ou de réglage de la machine d'épandage pour entraîner un segment de roue de dosage (103) respectif du rouleau de dosage (101) associé à un organe d'épandage respectif dans la largeur d'épandage (V) duquel se trouve une ornière (F) ou une section d'une ornière (F), à une vitesse de rotation respective moindre par rapport à la vitesse de rotation théorique prévue pour le dosage du débit massique théorique du produit à épandre.
